# EUROPEAN PATENT SPECIFICATION

(11) **EP 1 124 396 B1**
(45) Date of publication and mention of the grant of the patent: **19.12.2007**
(21) Application number: 01102740.6
(22) Date of filing: 07.02.2001
(51) Int. Cl.: H04L 29/06, H04Q 7/38

(54) **Mobility support for a correspondent node in a Mobile IP network**
Mobilitätsunterstützung für einen korrespondierenden Knoten in einem mobilen IP Netzwerk
Support de mobilité pour un noeud correspondent dans un réseau IP mobile

(30) Priority: 09.02.2000 JP 2000032372
(43) Date of publication of application: 16.08.2001
(73) Proprietor: FUJITSU LIMITED, Kawasaki-shi, Kanagawa 211-8588 (JP)
(72) Inventor: Igarashi, Yoichiro, c/o Fujitsu Limited, Nakahara-ku, Kawasaki-shi, Kanagawa 211 (JP); Kakemizu, Mitsuaki, c/o Fujitsu Limited, Nakahara-ku, Kawasaki-shi, Kanagawa 211 (JP); Yamamura, Shinya, Fujitsu Nishi-Nihon, Sawara-ku, Fukuoka-shi, Fukuoka 814-8588 (JP); Murata, Kazunori, Fujitsu Nishi-Nihon, Sawara-ku, Fukuoka-shi, Fukuoka 814-8588 (JP); Wakamoto, Masaaki, c/o Fujitsu Limited, Nakahara-ku, Kawasaki-shi, Kanagawa 211 (JP)
(74) Representative: HOFFMANN EITLE

(56) References cited:
- EP-A- 0 912 026
- EP-A- 0 924 913
- EP-A- 0 969 685
- WO-A-99/43175
- PERKINS C: "RFC 2002: IP Mobility Support " IETF RFCS - WWW.IETF.ORG, October 1996 (1996-10), XP002187650
- PERKINS C ET AL: "IMHP: A mobile host protocol for the Internet" COMPUTER NETWORKS AND ISDN SYSTEMS, NORTH HOLLAND PUBLISHING. AMSTERDAM, NL, vol. 27, no. 3, 1 December 1994 (1994-12-01), pages 479-491, XP004037981 ISSN: 0169-7552
- JACOB S ET AL: "Security of current mobile IP solutions" MILCOM 97 PROCEEDINGS MONTEREY, CA, USA 2-5 NOV. 1997, NEW YORK, NY, USA,IEEE, US, 2 November 1997 (1997-11-02), pages 1122-1128, XP010260752 ISBN: 0-7803-4249-6
- MYLES A ET AL: "A MOBILE HOST PROTOCOL SUPPORTING ROUTE OPTIMIZATION AND AUTHENTICATION" IEEE JOURNAL ON SELECTED AREAS IN COMMUNICATIONS, IEEE INC. NEW YORK, US, vol. 13, no. 5, 1 June 1995 (1995-06-01), pages 839-849, XP000499090 ISSN: 0733-8716

## Description

### Background of the Invention

### 1. Technical Field of the Invention

The present invention relates to a mobile communications system, and particularly to a network, which can accommodate a mobile terminal (a mobile node such as a portable PC, etc.) that moves between sub-networks.

### 2. Prior Art Technology

Recently, the volume of IP packet traffic has been sharply increasing with the rapid expansion of the Internet. Furthermore, with the popularization of cellular phones, IMT-2000 (International Mobile Telecommunications 2000) has been standardized, so that high-speed IP communication in a mobile environment appears to be becoming popular. Despite such rapid technical innovation, enhancement of IP communication, that is, a technique for implementing a value added service such as QoS (Quality of Service) for each terminal or load distribution of WWW (World Wide Web) traffic across multiple servers on an entire network does not seem to be maturing fully although it is in potential demand.

US vendors such as Cisco, 3com, etc. have taken the initiative in proposing the concept of PBN (Policy-Based Networking) as a framework for controlling an IP network. With the PBN, a policy server sets operation policies of a network (data used to provide a service to a user) in a network device group, which implements services such as QoS, etc. by referencing the policies. However, once a setting of a policy for each mobile terminal (setting of a service to be provided to each mobile terminal) is adopted and when a policy is added/changed, policy setting must be updated in all of the network devices which can possibly accommodate a mobile terminal, this leads to an increase in the policy setting process amount in the entire network. Furthermore, to apply the information notified by the PBN to a fundamental service stipulated by an individual mobile IP terminal, etc., the information must be made as a specification and examined in the situation of implementation to be suitable for each service.

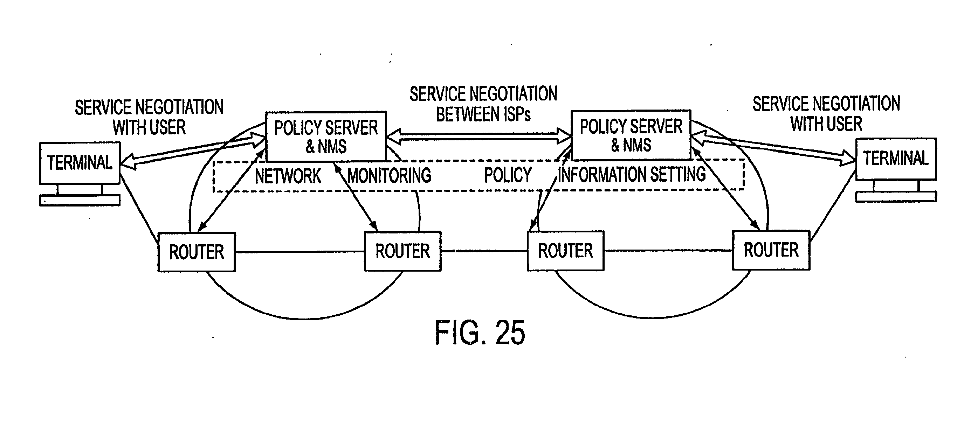

Fig. 25 exemplifies quality control in a network with a policy according to a conventional technique.

Exemplified here is a method like PBN (Policy Base Network) with which a policy server & NMS (Netware Management System) makes a service negotiation with a user, and an admission control for each user is provided in a fixed network. With the PBN, a policy server distributes network operation policies (control parameters) to a network device group (including a router, etc.) and sets them in the group. The network device group implements services such as QoS (Quality of Service: service quality control), etc. by referencing the above described policies when controlling packets.

However, if an attempt is made to set a policy dedicated to each mobile terminal, a problem may arise. That is, when a policy is added/changed, policy setting is required to be made in all of the network devices which can possibly relay packets transmitted/received by a mobile terminal. This leads to a great increase in the amount of policy setting processes in an entire network. In other words, network devices such as a router, etc. must hold a huge number of pieces of policy data for respective terminals. This is impractical as a service controlling method for each terminal.

In an IP network, in which voice and data communications are integrated, and to which various types of terminals are connected, a method such as Int-Serv (RSVP: see RFC 2205 of Internet Engineering Task Force, Network Working Group) or Diff-Serv (see RFC 2475 of Internet Engineering Task Force, Network Working Group) is proposed as a means for implementing QoS in order to protect traffic which is sensitive to a delay or traffic to which a higher business priority is assigned. Above all, the Diff-Serv method having a small overhead is considered most effective for a carrier network or a backbone network (a principal network connecting network of the Internet). However, this method requires policy setting in network devices on a path. Additionally, with this method alone, network management becomes troublesome.

Therefore, the concept of PBN (Policy-Base Networking) with which a server called a policy server collectively sets policies in network devices was proposed. However, in a seamless global network composed of various providers and carriers supporting mobile terminals, all of the local networks are required to determine a policy for every user who can possibly make a connection, and to set information in network devices. The only way to implement this determination and setting with the PBN is to locally hold the policy information of all users or to preset the information in potential network devices.

It is extremely inefficient and impractical to perform these operations for users totaling as many as hundreds of millions. Furthermore, continuously holding the policy information of all users in network devices requires an increase in the memory amounts of the network devices, so that the load for processing these huge amounts of information becomes heavier, leading to degradation in throughput.

Inversely, if a processing method for making an inquiry to a policy server in all cases is adopted, the overhead of making an inquiry to a policy server is incurred, and the possibility that the SLA (Service Level Agreement) cannot be complied with may increase.

EP 0 924 913 provides an arrangement supporting personal mobility in the Internet. For a subscriber, service readiness of a terminal that is not connected to the subscriber's home network is provided in that, with the aid of the identification of the subscriber which is inputted via the terminal, an IP address for the subscriber is interrogated at a server agent in the home network of the subscriber, and the interrogated IP address is transferred to a proxy node component of the terminal.

An object of the present invention is to provide a communications system of a network that extensively supports a mobile terminal.

### Summary of the Invention

According to the present invention, there is provided a mobile communications system according to the appended independent Claim 1, and a mobile communications method according to the appended independent Claim 11. Preferred embodiments are defined in the dependent claims.

### Brief Description of the Drawings

Fig. 1 explains a Mobile IP;
Figs. 2A and 2B schematically illustrate communication paths, which are shown in and extracted from Fig. 1;
Fig. 3 shows an example of a network configuration according to a preferred embodiment of the present invention;
Fig. 4 exemplifies a service profile;
Fig. 5 shows the process for registering a CN (Correspondent Node) to a proxy CN.
Fig. 6 exemplifies a sequence showing the fundamental procedure for registering the CN to the proxy CN;
Fig. 7 exemplifies a sequence showing the method for managing individual service control data within the proxy CN;
Fig. 8 exemplifies a sequence showing a preferred embodiment of the method for managing a visit state of the CN (No. 1);
Fig. 9 exemplifies a sequence showing the preferred embodiment of the method for managing the visit state of the CN (No. 2);
Fig. 10 exemplifies a sequence showing another preferred embodiment of the method for managing the visit state of the CN (No. 1);
Fig. 11 exemplifies a sequence showing another preferred embodiment of the method for managing the visit state of the CN (No. 2);
Fig. 12 exemplifies a sequence showing another preferred embodiment of the method for managing the visit state of the CN (No. 3);
Fig. 13 shows a first preferred embodiment of the method for arranging a proxy CN functional group;
Fig. 14 shows a second preferred embodiment of the method for arranging the proxy CN functional group;
Fig. 15 shows a third preferred embodiment of the method for arranging a proxy CN functional group;
Fig. 16 exemplifies a flowchart explaining the IP service control message process in the preferred embodiment shown in Fig. 13 (No. 1);
Fig. 17 exemplifies a flowchart explaining the IP service control message process in the preferred embodiment shown in Fig. 13 (No. 2);
Fig. 18 exemplifies a flowchart explaining the IP service control message process in the preferred embodiment shown in Fig. 14 (No. 1);
Fig. 19 exemplifies a flowchart explaining the IP service control message process in the preferred embodiment shown in Fig. 14 (No. 2);
Fig. 20 exemplifies a flowchart showing the IP service control message process in the preferred embodiment shown in Fig. 14 (No. 3);
Fig. 21 exemplifies a flowchart showing the IP service control message process in the preferred embodiment shown in Fig. 14 (No. 4);
Fig. 22 exemplifies a flowchart showing the IP service control message process in the preferred embodiment shown in Fig. 15 (No. 1) ;
Fig. 23 exemplifies a flowchart showing the IP service control message process in the preferred embodiment shown in Fig. 15 (No. 2);
Fig. 24 exemplifies a flowchart showing the IP service control message process in the preferred embodiment shown in Fig. 15 (No. 3); and
Fig. 25 exemplifies the conventional quality control using policies in a network.

### Detailed Description

The present invention assumes the technique recited in the U.S. Patent Application No. 09/672,866 (the Japanese Patent Application No. 2001-169341). Hereinafter, the contents of this application will be briefly described. For further details, please refer to the specification included in the application.

A mobile communications system enables a mobile terminal connecting to a network composed of a plurality of sub-networks to be provided with communication similar to that provided in a first sub-network when connecting in a second sub-network, even after moving from the first to the second sub-network. This system comprises: a correspondent terminal making a communication with the mobile terminal; an authenticating unit authenticating the correspondent terminal; a setting unit setting communication parameters that the correspondent terminal requires to make a communication with the mobile terminal when the mobile terminal moves from the first to the second sub-network; and a communicating unit making a communication between network controlling devices so as to set the communication parameters.

A mobile communications method for use in a network including a correspondent terminal making a communication with a mobile terminal, which enables the mobile terminal connecting to a network composed of a plurality of sub-networks to be provided with communication similar to that in a first sub-network when connecting in a second sub-network, even after moving from the first to the second sub-network. This method comprises the steps of: (a) authenticating the correspondent terminal; (b) setting communications parameters that the correspondent terminal requires to make a communication with the mobile terminal when the mobile terminal moves from the first to the second sub-network; and (c) making a communication between network controlling devices so as to set the communication parameters.

A router accommodates a terminal which makes a communication with a mobile terminal, hunts binding information about the mobile terminal, which is transferred from the home agent of the mobile terminal to the terminal, and processes data packets from the terminal to the mobile terminal based on the binding information.

Devices arranged within a network make a communication for managing or setting communication parameters required when a mobile terminal moving between sub-networks communicates with a correspondent terminal while straddling the sub-networks, and the correspondent terminal communicates with the mobile terminal via these devices. Accordingly, the correspondent terminal does not need to comprise a particular capability to receive a communication service with the mobile terminal, so that a heavy processing load is never imposed on the correspondent terminal. Therefore, various terminals possessed by users are available as a correspondent terminal, and the users can easily receive a communication with a mobile terminal.

This Patent Application provides a framework of a service control, which is based on a Mobile IP architecture implemented by combining the Mobile IP that is stipulated by RFC 2002 and an AAA (Authentication, Authorization, and Accounting) system that is currently being reviewed by IETF (Internet Engineering Task Force: a leading standardization organization for the Internet; Internet Engineering Task Force, Network Working Group RFC 2002: IP Mobility Support, October 1996:), for effectively setting necessary information (policies) in a global network straddling providers from a user profile that is managed in a centralized manner.

With the technique recited in this application, a database for storing information set in a network device in user units is arranged in the AAA system, and the function for extracting the information from the identifier (NAI: Network Access Identifier) of a user when an authentication request is made, and for selecting and notifying the information required by the functional entities stipulated by RFC 2002, FA (Foreign Agent. Its details will be described later), and HA (Home Agent. Its details will be also described later). Furthermore, the protocol used for a communication between functional entities is expanded so that the information required by each entity can be notified, the HA and the FA are equipped with the function for caching the information notified from the AAA system, and a function for controlling the information setting in a network device and packet editing is added. These functions are integrated with the registration procedure of the Mobile IP, handoff (handover) during a move, or the procedure for optimizing a route, so that it becomes possible to set valid policy information while a user accesses a network.

Accordingly, the present invention is explained by assuming the Mobile IP. For details of the Mobile IP, please see the following references.

"Mobile IP: The Internet Unplugged" written by James D. Solomon, supervised and translated by F. Teraoka and J. Inoue, and published by Pierson Education, Co.

Acronyms that appear in the explanation of preferred embodiments are explained below.

### - MIP (Mobile IP)

Mobile IP protocol stipulated by RFC 2002 and its all future expansions.

### - AAA protocol

Protocol used by an AAA system. The present invention does not determine a protocol to be used. However, the preferred embodiments assume the use of DIAMETER protocol (that is currently being reviewed by IETF, and is obtained by expanding the RADIUS protocol for authentication and accounting, which is most frequently used by Internet service providers). The AAA protocol is available as any protocol that can transmit the information about authentication, authorization, accounting, and policies.

### - Database retrieval protocol

Protocol for retrieving a service profile database. A protocol to be used depends on a database product used as a service profile database. LDAP (Lightweight Directory Access Protocol: stipulated by X.500 being the standard of ISO (International Standard Organization) and ITU (International Telecommunication Union)) is normally used. The present invention does not refer to the operations of a retrieval protocol and a database.

### - MN (Mobile Node)

A mobile terminal having a Mobile IP protocol function.

### - CN (Correspondent Node)

A communication node with which a mobile terminal communicates.

### - AAA

An acronym that is used by IETF for a server group that performs authentication, authorization, and accounting. The AAA server group comprises a function for respectively notifying an HA or an FA (Foreign Agent) of a service profile by using an HA registration request message or an authentication acknowledge message via an AAAF.

In addition to the above described functions, the AAA server group according to the present invention comprises a service management function for extracting a service profile of a user who makes an authentication request from a service control database, and for generating a service profile having a general-purpose format in which packet control information can be set. An AAAH is an AAA server in a network, which holds the subscriber data of the user who makes the authentication request, whereas an AAAF is an AAA server in a network, which does not hold the subscriber data of the user. The AAAF identifies the AAAH based on the NAI (Network Access Identifier) of the user, and directly transmits a message to the HA as a proxy.

### - FA (Foreign Agent)

A functional entity defined by RFC 2002. An agent which does not have a home address assigned to a mobile terminal. De-encapsulating a packet which is encapsulated and transmitted to a care-of-address being the address of its own node, and relaying the packet to the link layer address corresponding to the home address. This address correspondence is managed by a table called a visitor list. At the same time, the FA is an access router of a mobile terminal and an AAA protocol client. The FA has a session transaction function for managing a DIAMETER session.

### - HA (Home Agent)

A functional entity defined by RFC 2002. An agent having a home address assigned to a mobile terminal. The packet, which is addressed to the home address of the mobile terminal and relayed by the HA, is encapsulated and transmitted to the care-of-address of the FA, which corresponds to the home address. Here, a "care-of-address" is something like a post office box in a normal postal system. This address correspondence is managed by a table called a (mobile) binding cache. The HA is an AAA protocol client at the same time. The HA has a session transaction function for managing a DIAMETER session.

Furthermore, the present invention relates to route optimization in the Mobile IP, and to the technique recited in the Japanese Patent application No. 2001-169341.

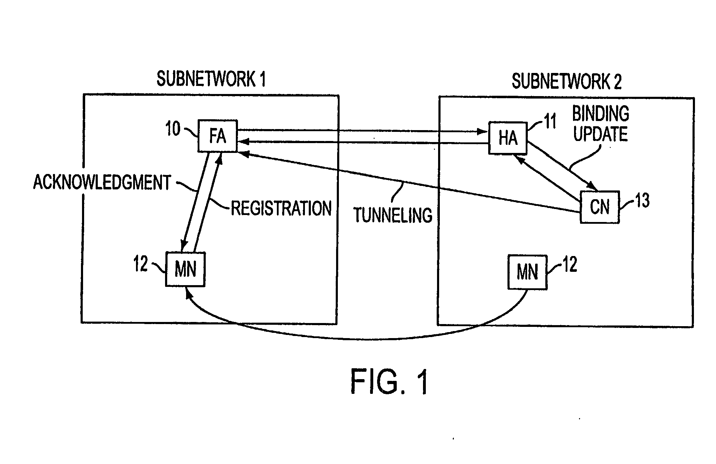

Fig. 1 explains the mobile IP.

Assume that a network is composed of sub-networks 1 and 2. Also assume that a mobile node (MN) 12 first stays in a sub-network 2, and makes a communication with a CN 13 via an HA 11. The MN 12 can be carried like a portable PC, and can be connected to a different network.

Here, suppose that the MN 12 moves from the sub-network 2 to the sub-network 1. After the MN 12 moves to the sub-network 1, it attempts to start a communication with the CN 13 connected to the sub-network 2. Initially, the MN 12 issues a registration request to an FA 10 so that the FA 10 makes a registration such that the MN 12 itself comes in the network 1. Furthermore, the FA 10 notifies the HA 11 in the sub-network 2 that the MN 12 is currently under the control of the FA 10. The HA 11 issues to the CN 13 an instruction to update the network binding information for communicating with the MN 12 based on the notification from the FA 10. Upon completion of the registration for the MN 12, the HA 11 returns its acknowledgment to the FA 10. After the FA 10 makes a registration such that the MN 12 is currently under its control, it returns an acknowledge message to the MN 12 as a notification indicating that a communication can be made. When transmitting a message to the MN 12 based on an update instruction, the CN 13 transmits a signal to the FA 10 (by tunneling), and gets the FA 10 to transfer the message. As a result, a communication with the MN 12 can be enabled.

In the meantime, in a communication from the MN 12 to the CN 13, the MN 12 first transmits the message that the MN 12 addresses to the CN 13 to the FA 10. The FA 10 transmits the message received from the MN 12 directly to the CN 13. In this way, the MN 12 can continue to make the communication with the CN 13 even after moving to the sub-network 1.

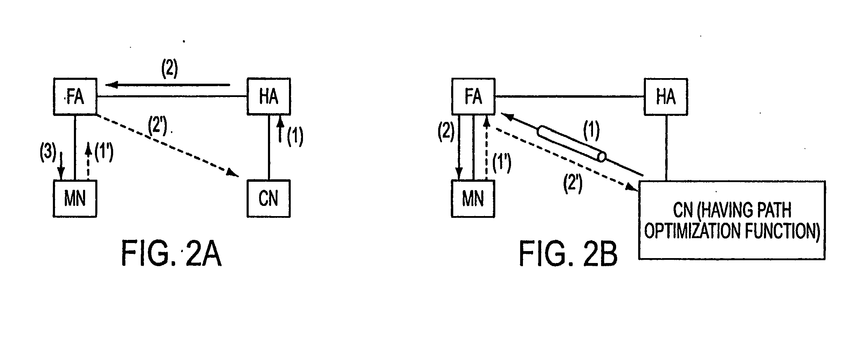

Fig. 2A and 2B schematically illustrate communication paths which are shown in and extracted from Fig. 1. Fig. 2A shows the case where path optimization is not made, whereas Fig. 2B shows the case where path optimization is made.

As shown in Fig. 2A, in the case where path optimization is not made, the message transmitted from the MN is transmitted to the FA, and then transmitted from the FA to the CN, while the message from the CN is once transmitted to the HA, and transmitted to the FA. The message is then transmitted to the MN. Since the message from the CN to the MN must pass through the HA as described above, the function of the HA being the network resource is used for each communication, leading to a waste of network resources.

Fig. 2B shows the case where path optimization is made. The CN having a path optimization function transmits the message addressed to the MN not to the HA but directly to the FA, which transmits the message to the MN. The flow of the message from the MN to the CN is similar to that shown in Fig. 2A. In this way, it becomes unnecessary to pass through the HA in each communication, thereby preventing the network resources from being wasted.

With the function(1) being the path optimization (draft-ietf-mobileip-optim-08.txt) in the Mobile IP, each CN is equipped with a binding cache management function and a tunnel packet generation function, which are possessed by the HA, so that an individual CN generates and transmits a tunnel packet addressed to the care-of-address of the MN. Consequently, the packet of each CN which communicates with the MN is transmitted directly to the care-of-address of the MN by means of tunneling and not via the HA. In this case, each CN must manage protocol manipulations required for the path optimization, and data to be held in CN units.

With the function (2) being the technique recited in the Japanese Patent Application No. 2001-169341, a "service profile" is distributed to each CN so as to perform an individual service control for each CN. Specifically, a service profile is added to the binding update message used in path optimization, and the message with the profile added is transmitted to a CN. Similarly in the case of the above described binding cache, the CN newly creates an entry for a received binding cache if the entry does not exist within the CN itself. If the entry already exists, the CN updates the service profile.

As described above, function addition is required for each CN as its requisite so as to perform individual service control. To receive the individual service control recited in the Japanese Patent Application No. 2001-169341, the CN must comprise the above described function (2).

Furthermore, as a prerequisite of the CN in the Japanese Laid-open Patent Application No. 2001-169341, a mobile terminal which can receive the individual service control according to this application must comprise the processing capability of the Mobile IP.

With this capability, however, some link layers cannot be supported, for example, a dial-up connection in PPP (Point-to-Point Protocol) being a principal protocol for accessing an ISP (Internet Service Provider) in a mobile terminal, or the like. For this reason, a portable CN (mobile terminal) cannot receive the individual service control disclosed in the Japanese Patent Application No. 2001-169341. To enable the individual service control to be received, the following requisites must be satisfied.
(1) Functions must be added to a CN to be recognized as a service target according to the Japanese Patent Application No. 2001-169341. Adding functions to a device with a low throughput increases a load on the throughput. This does not become a problem in a stationary workstation or PC well within the maximum throughput. However, this can possibly become a serious problem in a portable mobile device of a small size in some cases.
(2) Similarly, in the technique according to the Japanese Patent Application No. 2001-169341, adding functions to a CN is essential to receive the individual service control provided by this technique. This becomes an obstacle to popularizing the service of this architecture. To provide every CN with the same service, no individual requisite must be imposed on a terminal.
(3) Also in a mobile terminal which cannot use the Mobile IP due to a functional restriction depending on a link layer type when a CN connects to an ISP, the individual service control must be provided by the execution of the function on a network edge as a proxy. Especially, a CN which assumes a move between networks frequently uses a dial-up PPP, and cannot use the Mobile IP. This can possibly become a problem in popularizing the service in a similar manner as in (2).

Accordingly, if the CN according to the Japanese Patent Application No. 2001-169341 is attempted to be equipped with the above described functions, a more serious problem may arise, especially, in a portable CN, and the function specific to this architecture is required to be added. The following two requisites must be satisfied to provide the service to a wider variety of terminal and user types by accommodating the function of the CN on a network side.
(1) Releasing each CN from being added with functions.
(2) Also allowing a mobile terminal under a non-Mobile IP environment to receive the individual service control.

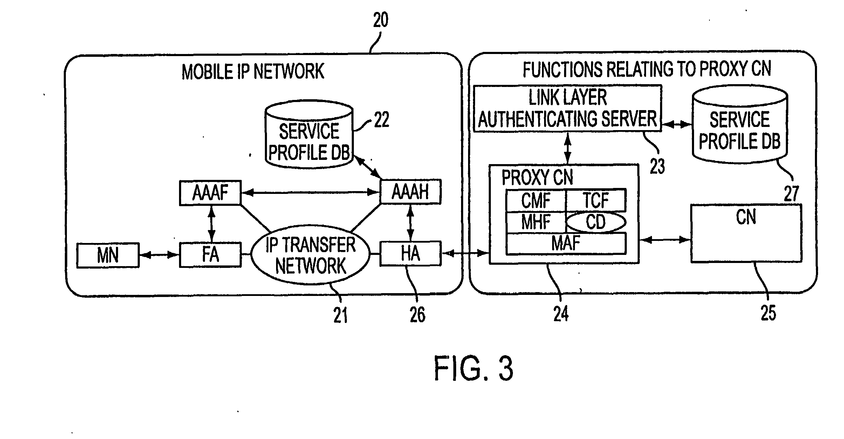

Fig. 3 shows the configuration of a network according to a preferred embodiment of the present invention.

In the preferred embodiment according to the present invention, a proxy CN that acts for a CN is arranged in a network, not adding many functions to the CN as described above. The entire network is configured as a Mobile IP network, where the above described MN, FA, AAAF, AAAH, and HA are arranged. The FA, HA, AAAF, and AAAH can exchange messages across an IP transfer network 21. The proxy CN can be implement in software or hardware for example in a router.

Namely, when the MN desires to communicate with the CN accommodated by the HA, it makes a registration request to the FA. This request is notified to the AAAH via the AAAF. The AAAH verifies the content of a service to be provided by referencing a service profile database 22, and notifies the HA. In the above described explanation, the CN is connected directly to the HA, and communicates with the MN. With this method, however, the number of functions added to the CN increases, so that a processing delay can occur due to a lack of a processor processing capacity if the CN is also a portable PC similar to the MN.

Accordingly, a proxy CN 24 is arranged between the CN 25 and the HA 26. The proxy CN 24 comprises a functional group including CMF, TCF, MHF, CD, and MAF, which will be described later. The CN 25 accesses the proxy CN 24 in order to communicate with the MN. The proxy CN 24 inquires of a link layer authenticating server 23 as to whether or not to authenticate an access of the CN 25. The link layer authenticating server 23 obtains necessary parameters by referencing a service profile database 27 according to the NAI of the CN 25, verifies the content of the service to be provided to the CN 25, and notifies the proxy CN 24 that the communication is authorized. The proxy CN 24 issues communication authorization to the CN 25. The CN 25 that receives the communication authorization transmits the message from the CN 25 to the MN via the proxy CN 24 and the HA 26. The message transmitted to the HA 26 is then transmitted to the MN as described above.

By arranging the functions to be arranged in the CN 25 in the proxy CN 24 as described above, there is no need to add functions to an individual CN. As a result, a CN of any type can receive a service of a corresponding network.

Furthermore, if a service provided to the CN 25 includes tunneling, the message passed from the CN 25 to the proxy CN 24 is transmitted directly to the FA.

A service profile database 27 shown in Fig. 3 is composed of service profiles for respective user identifiers (NAIs). A variety of services including a security service, a multicast service, etc. can be registered and implemented.

A service profile is composed of NAI for identifying a user, and a service block having a configuration which differs depending on a service type. The service block is composed of a service type, policy, and information specific to a service. The information specific to a service of packet filtering includes a regulation address and an application condition. The information specific to a service of the Diff-Serv transmission applied to a transmission packet of a mobile terminal includes a reception destination address, a reception destination port, and a TOS (Type Of Service) value. The information specific to a service of the Diff-Serv reception applied to a reception packet of a mobile terminal includes a transmission source address, a transmission source port, and a TOS value.

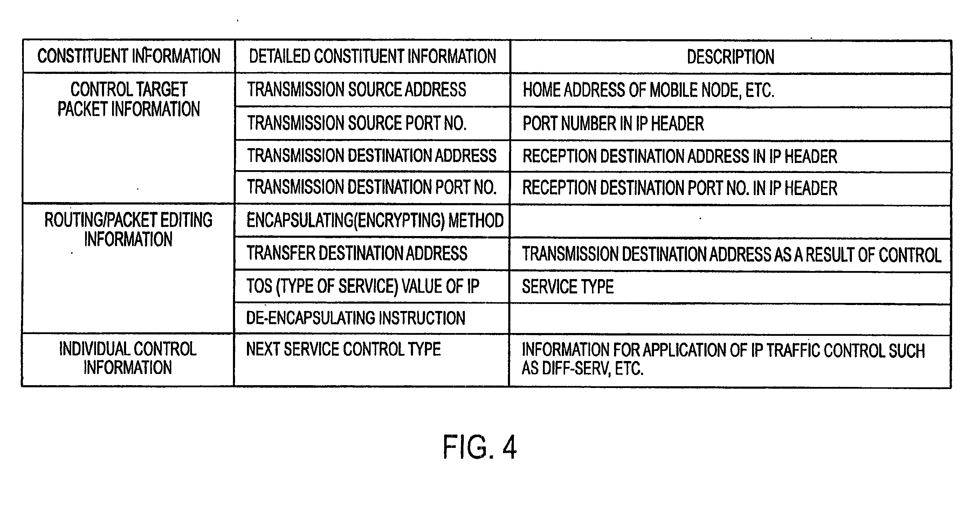

Here, an example of a service profile is shown in Fig. 4.

The service profile is an "information set" describing a packet controlling means required to perform the IP service control provided by the present invention.

The following constituent elements are included as specific items.

### (1) control target packet information

Information for identifying the type of a packet to be controlled.

### (2) routing/packet editing information

Information about the type and the means of packet control (ex. transmission destination address, etc.)

### (3) specific control information

Information about a service controlling means specific to a physical device. An FA and an HA are composed of a router controlling unit and a service controlling unit.

The router controlling unit comprises a routing table, a binding cache being a temporary routing table, and a service control filter for identifying a service control target packet. This unit has the functions for extracting a reception IP header, and for editing header information.

The service controlling unit comprises a service control transaction function, with which a service control transaction is set, retrieved, updated, or deleted according to the request from the router controlling unit. The service controlling unit comprises an MIP and a DIAMETER protocol function, and also comprises a general protocol processing function using message reception and transmission buffers.

The proxy CN functional group is a set of functional entities required when the functions that each CN must comprise are separated from the CN, and arranged on a network side.

To be more specific, this group is composed of the functions which are listed and defined below.
(1) CMF (Cache Management Function): A function storing and managing a binding cache (care-of-address, etc. of a mobile node (hereinafter abbreviated to MN) being a communication partner) for path optimization in the Mobile IP. Specifically, detecting the binding cache transmitted from an HA, newly generating an entry if the entry for this cache does not exist, and updating the entry with the received information of the binding cache if the cache already exists.
(2) TCF (Tunneling Capability Function): A function generating a tunnel packet to a care-of-address of the MN which implements path optimization in relation to the above described (1). If this function is comprised when a packet is attempted to be transmitted to the care-of-address of the MN which implements the path optimization, the packet is encapsulated (for example, encapsulated as an IP-in-IP packet) based on the information stored in the binding cache.
(3) MHF (Message Handling Function): If a specific message interface is defined in the present invention, the MHF transmits/receives this message. If the proxy CN functional group is arranged in distributed physical entities, and if they must reciprocally exchange specific information, this function generates a message on a transmitting side or detects a message on a receiving side.
(4) MAF (Mobile Agent Function): A mobile agent function in the Mobile IP. This function is used to dynamically register/delete a CN that can use the Mobile IP to/from a proxy CN.
(5) CD (Cache Data): Contents of the database to be originally possessed by a CN in the preferred embodiment according to the present invention. Having a memory for storing these contents, etc. Specifically, the CD is composed of a visitor list and a binding cache.

Data types that a proxy CN requires to register and manage an individual CN are listed below.
(1) visitor list: A list including the fundamental visitor information, and the information about the visit state flag of each CN, and the information (pointer) for making an association with cache data to be described later.
(2) binding cache: A binding cache to be continually held by a CN in path optimization in the Mobile IP. The binding cache is included in a binding update message.
(3) service profile: Profile data that is prepared for each NAI and for implementing the individual service control in the Japanese Patent Application No. 2001-169341. The service profile is or may be included in the binding update message.

Since the arrangement of the above described functional entities and data configuring the proxy CN may differ in a network depending on an implementation method, there is not fixed mapping for the physical entities. In other words, there is no need to equip the proxy CN with all of the functions. A CN or an HA may be equipped with some of these functions.

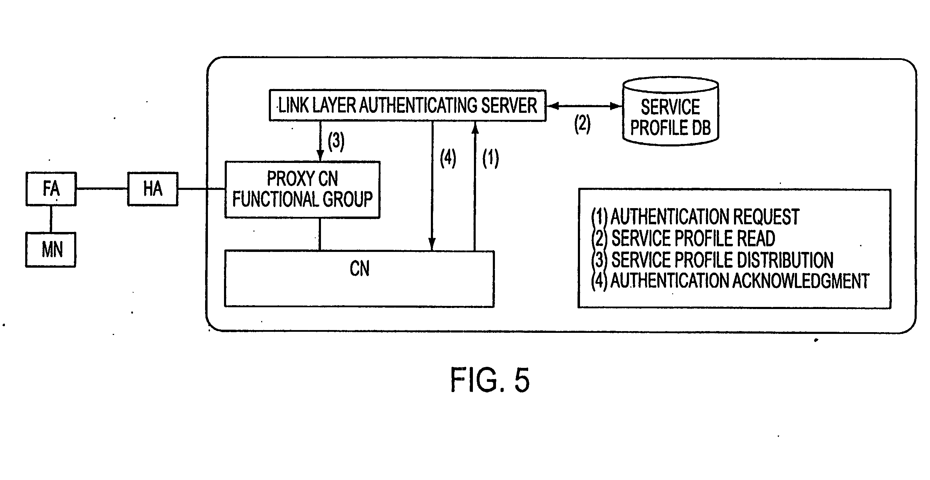

Fig. 5 shows the process for registering a CN (without Mobile IP functionality) to a proxy CN.

If a CN which can move between networks (hereinafter referred to as a mobile CN) is registered to a proxy CN managed by the ISP to which the CN is connected, PPP (Point-to-Point Protocol) is used as a general access method. When a connection is made to the ISP by a telephone line, this protocol is used in most cases.

However, if the proxy CN provided by the ISP is attempted to be used via the PPP, the Mobile IP cannot be recognized. This is mainly because the mobile node (mobile CN) of the Mobile IP issues a registration request with a home address specified. However, a dial-up server of the PPP cannot authorize such an address (an address the prefix of which is different from that of a staying network).

In such a case, means for using a proxy CN without using the Mobile IP is provided.

For the authentication of the CN via the PPP, an AAA server in a Mobile IP network is unavailable. Therefore, a link layer authenticating server is prepared as a proxy of the CN using the PPP connection, and a connection to the network is authorized if authentication is made by the authenticating server.

Furthermore, as a method for distributing the service profile for the CN corresponding to this case, the service profile database (service profile DB) connected to the above described link layer authenticating server is prepared, not the AAA server, and the original data of the service profile for the corresponding CN is stored in the database. After the link layer authenticating server receives a connection request from the CN ((1) of Fig. 5) and verifies that this CN is a legal CN, it reads the profile data from the service profile DB ((2) of Fig. 5), and notifies the proxy CN ((3) of Fig. 5). The link layer authenticating server then issues access authorization to the CN ((4) of Fig. 5).

In this way, the method for registering a CN to a proxy CN where a CN which cannot use the Mobile IP, such as a CN using the PPP, is provided, thereby enabling an individual service control.

Or, if a CN can use the Mobile IP, then the Mobile IP method can be used and implemented as the means for registering the CN to the proxy CN, the means being the fundamental mechanism of the Mobile IP with which an MN (Mobile Node) makes a registration to an FA (Foreign Agent). Since the proxy CN comprises an MAF (Mobile Agent Function), the CN is registered to the proxy CN with the registration procedure of the Mobile IP. The service profile for the CN is distributed from the AAA server to the proxy CN via the HA, and the profile is stored in the service profile cache for the corresponding CN that the proxy CN manages within the proxy CN.

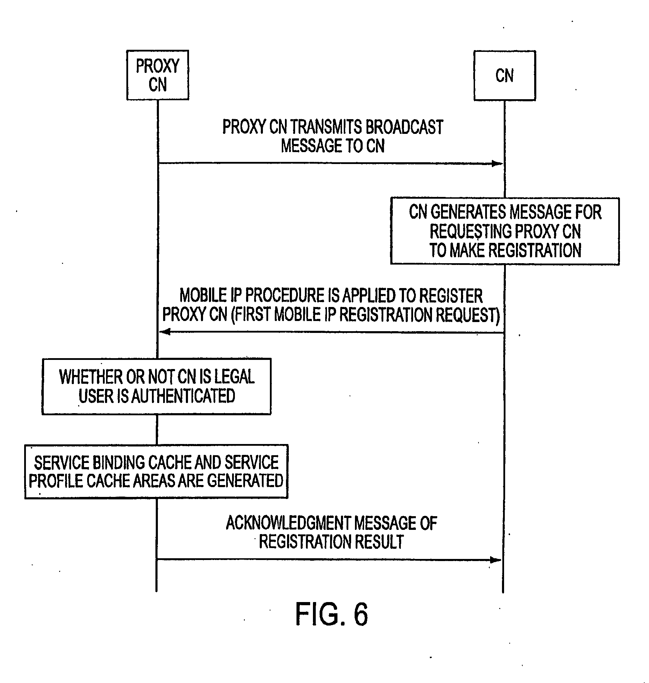

Fig. 6 shows the sequence of the fundamental procedure for registering a CN to a proxy CN.

The sequence shown in Fig. 6 is fundamentally the same as that for transmitting/receiving a message with the Mobile IP when the MN makes a registration to the FA, except that areas of the binding cache and the service profile cache of a registered CN are generated as a process within the proxy CN.
(1) The proxy CN serves also as an FA (Foreign Agent) of the Mobile IP. Accordingly, the proxy CN "broadcasts" an agent advertising message that the FA belongs to the sub-network to which the proxy CN itself belongs. This broadcast message is received by all nodes within the sub-network. The proxy CN makes the node that attempts to register to the proxy CN itself receive the broadcast message, and notifies the node of the existence of the proxy CN.
(2) The CN, which roamed to the proxy CN and is currently under its control, searches for the agent advertising message transmitted by the proxy CN. The CN that receives this message generates a registration request message including the information of the CN itself in order to request the proxy CN to register the CN.
(3) The CN transmits the registration request message generated in (2). Its destination is the proxy CN.
(4) The proxy CN authenticates the legality of the CN that transmits the registration request message. An authentication method depends on an implementation of this preferred embodiment. Method examples include a method for requesting an AAA server to perform authentication, a method with which the home agent of a CN performs authentication, etc. When the legality of the CN is authenticated, the proxy CN performs the next step.
(5) As an operation specific to the proxy CN, a service profile cache and a binding cache are generated for a CN to be registered.
(6) When the above described steps are properly completed, the proxy CN transmits a registration acknowledge message of the Mobile IP to the CN. The CN that receives the acknowledge message learns that the registration request that the CN itself transmitted is properly accepted.

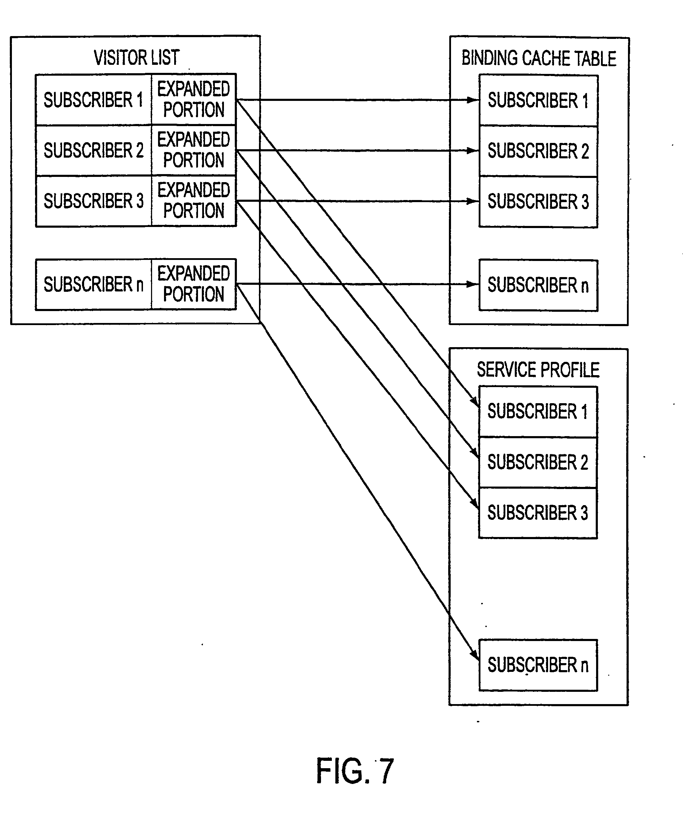

Fig. 7 shows the method for managing individual service control data within a proxy CN.

Here, means for holding cache data relating to a CN to be managed will be described. The proxy CN makes an association between the visitor list possessed by the mobile agent function of the Mobile IP and cache data. The visitor list includes the information for individual CNs staying in the area of the proxy CN. A specific association method is as follows. Expanded information is added to each visitor list entry, and an index pointer pointing to the locations of a binding cache and a service profile cache are stored in the expanded portion. Handling of the binding cache and the service profile cache, which are held by the proxy CN, can be performed together with the management of the visitor list by an MAF (Mobile Agent Function), so that processes such as cache generation, deletion, etc. can be facilitated. Here, the binding cache stores the care-of-address of the FA accessed by the MN that also makes an access to the CN being a subscriber and the home address of the MN by making an association between them.

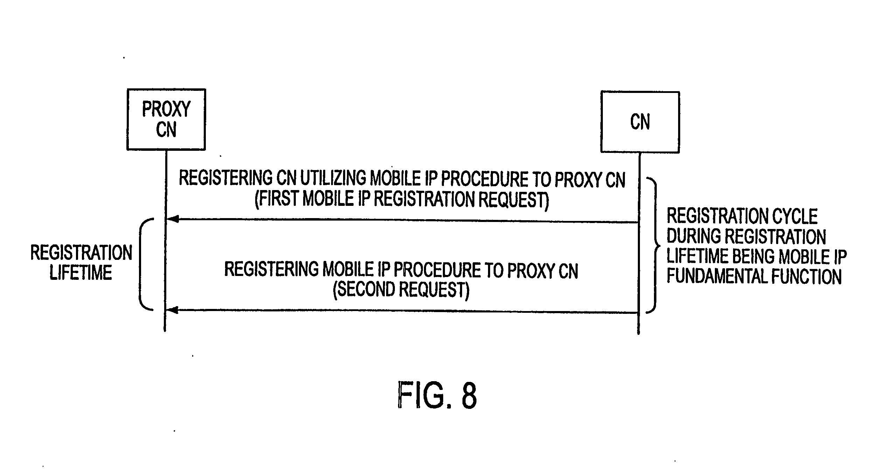

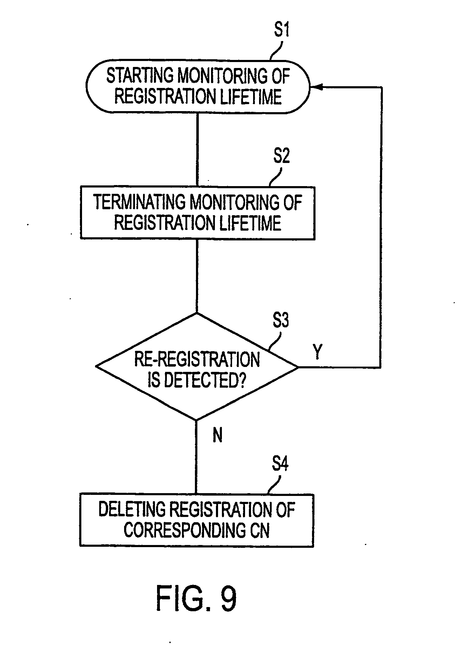

Figs. 8 and 9 show the sequences representing a preferred embodiment of the method for managing the visit state of a CN.

A mobile CN is dynamically registered to a proxy CN. To detect that the mobile CN moves to a different network, it is necessary to cyclically verify that each CN is currently under the control of the proxy CN.

Verifying means according to this preferred embodiment is the one adopted in the case where the CN is registered to the proxy CN by using the Mobile IP.

The CN is registered to the proxy CN using the registration procedure of the Mobile IP as a registering method. When the Mobile IP registration is made, its lifetime must be decided, and the CN must be re-registered before the lifetime expires. If the CN can use the Mobile IP, the above described cyclic re-registering procedure of the Mobile IP is also used as visit state verification.

Fig. 9 shows the process for a particular subscriber as a flowchart.

In Fig. 9, the lifetime of a registration starts to be monitored in step S1. In step S2, the above described table is searched. In step S3, it is detected whether or not a time stamp is rewritten by the re-registration of the subscriber. If the time stamp is detected to be rewritten, the process goes back to step S1 where the monitoring again starts. If the time stamp is not rewritten, the registration of the corresponding subscriber is deleted in step S4.

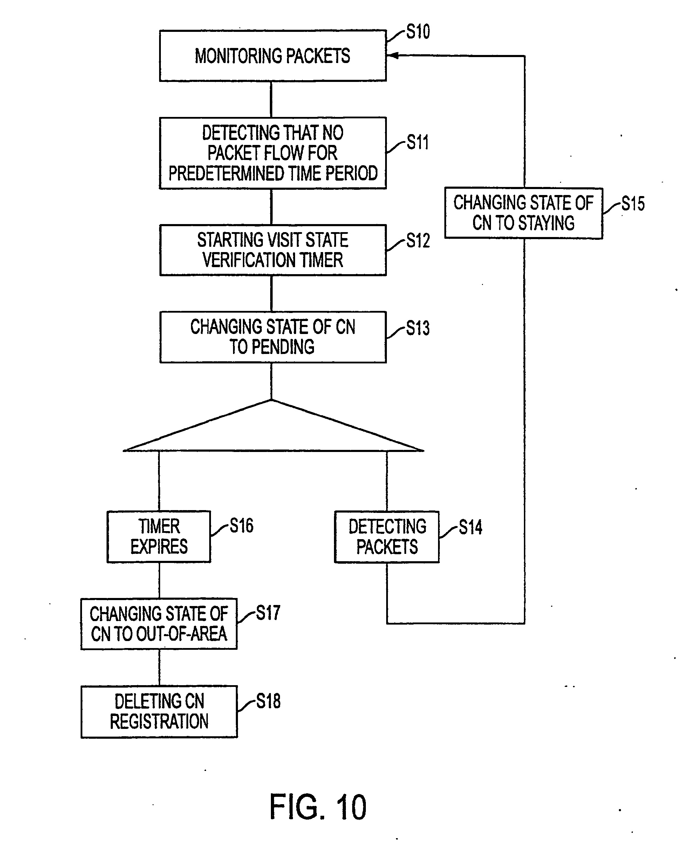

Figs. 10 through 12 show the method for managing the visit state of a CN, according to another preferred embodiment.

If a CN cannot use the Mobile IP in the preferred embodiment shown in Figs. 8 and 9, the cyclic and explicit registering methods like the Mobile IP do not existthen, a staying/out-of-area state cannot be explicitly verified depending on the presence/absence of a registration message. In this case, there is no general means for cyclically verifying the visit state. However, it can be determined that the CN leaves the area (moves to a different network or ISP), if there is no activity of the CN (packet transmission) for a predetermined time period. The following two types are available as a verifying means.

Fig. 10 is a flowchart showing a first visit state managing method in the case where a CN cannot use the Mobile IP.

As data being a basis, a proxy CN holds the data indicating the visit state of each CN. Here, this data is referred to as a visit state flag.

Normally, the proxy CN monitors packets (step S10). The visit state flag is set to a "staying" state at the beginning of the registration of a CN or while the CN is verified to transmit packets (frequently).

If the proxy CN detects that the packets from the CN do not flow for a predetermined time period (step S11), it considers that the CN has possibly left the area, and changes the visit state flag to a pending state.

The proxy CN starts a determination timer at the same time it changes the visit state flag to the pending state (step S12). If no packets of the CN flow before the timer expires (step S16), the state of the CN is determined to be "out-of-area". The visit state flag at this time is set to an "out-out-area" state (step S17). Once the "out-of-area" state is determined, the proxy CN deletes the registration of this CN in a similar manner as in the above described case where the Mobile IP is available and the cyclic re-registration message is not received (step S18). Also at this time, the corresponding data entry is deleted. If the packets of the CN are detected in step S14, the state of the CN is changed to the staying state in step S15. The process then goes back to step S10 where the proxy CN restarts to monitor packets.

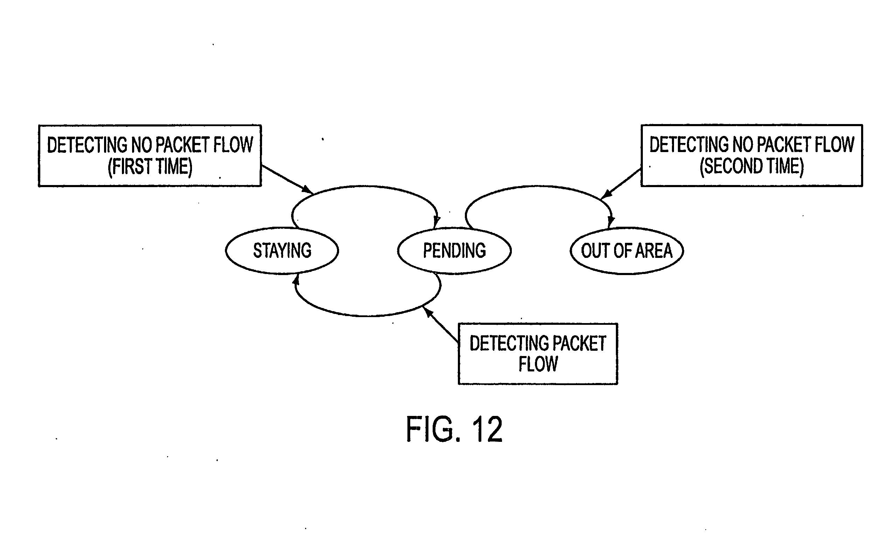

Fig. 12 shows the state transition of the visit state flag in the method shown in Fig. 10.

The visit state flag that is initially set to the staying state makes a transition to the pending state when no packets are detected to flow. Here, if packets are again detected to flow, the visit state flag is restored to the staying state. However, if no packets are again detected to flow in the pending state, the CN is determined to be out of the area of the proxy CN. Therefore, the visit state flag is changed to the out-of-area state. The visit state flag of a newly registered CN is first set to the staying state after its data entry is generated. Thereafter, the above-described transition is repeated until the CN gets out of the area.

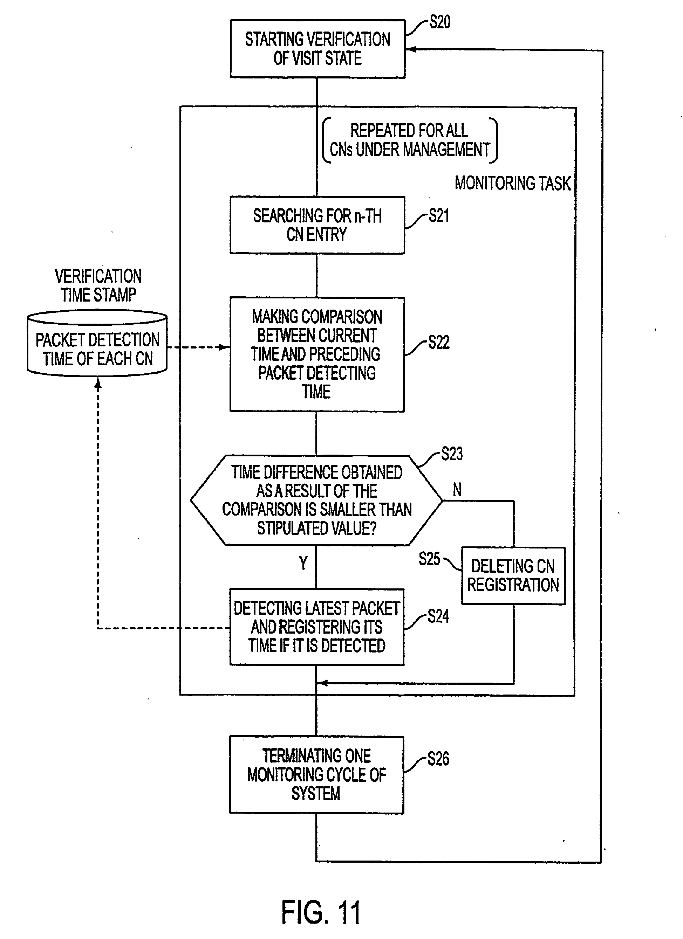

Fig. 11 is a flowchart showing a second visit state managing method in the case where a CN cannot use the Mobile IP.

For each CN that a proxy CN manages, a " preceding visit state verification time" (hereinafter referred to as a verification time stamp) is added as expanded data of a visitor list entry. Furthermore, a single cyclic monitoring task (hereinafter referred to as a monitoring task) in the entire proxy is started.

This monitoring task references the verification time stamps of all of staying CNs in a predetermined cycle. A verification time stamp is a time at which the packet transmitted from the CN is detected in the preceding cycle.

If the difference between the current time and the verification stamp is larger than the value stipulated within the proxy CN, that is, if no packets from the CN are detected to flow for a predetermined time period or longer, the registration of the CN is deleted. If the difference is smaller than the stipulated value, the CN is determined to stay, and the proxy CN continues to hold the registered state.

That is, in Fig. 11, visit state verification is started in step S20, and the monitoring task starts the process. First of all, in step S21, an n-th CN entry is searched. In step S22, the comparison between the current time and the preceding packet detection time of the CN is made. At this time, the detection time is obtained by reading the verification time stamp. Then, in step S23, it is determined whether or not the time difference obtained as a result of the comparison is smaller than a stipulated value. If the time difference is smaller than the stipulated value, the most recent packet is attempted to be detected in step S24. If the packet is detected, its time is registered as a verification time stamp. If the time difference is larger than the stipulated value in step S23, the registration of the CN is deleted. The monitoring task performs the steps S21 through S25 for all of CN entries. When the completion of one monitoring cycle is verified in step S26, the process goes to step S20 where the visit state verification process is restarted.

Furthermore, as another method for managing the visit state of a CN, the following method may be considered.

Sometimes, a CN that cannot use the Mobile IP may disconnect a link to a proxy CN by explicitly disconnecting a telephone line, etc. This disconnection can be detected as a line disconnection of a link layer on a proxy CN side (network side). The proxy CN monitors the information about this link layer disconnection. When the proxy CN detects the disconnection, it determines that the CN has left the area, and performs the process for deleting the registration of the CN.

A specific method for detecting the disconnection between the proxy CN and the CN as a line disconnection of a link layer can be easily understood by a person having ordinary skill in the art. Accordingly, the determination of whether or not the CN leaves an area, and the registration deletion process based on this determination are considered to be easily implemented by the person having ordinary skill in the art.

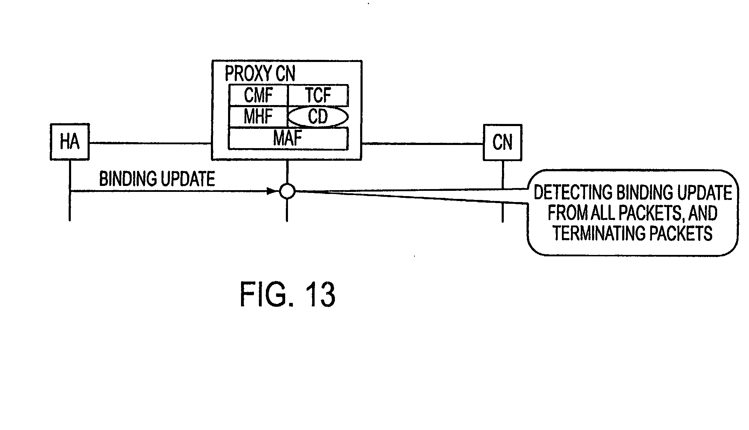

Fig. 13 shows a first preferred embodiment of the method for arranging the proxy CN functional group.

As the method for arranging the proxy CN functional group, a binding update message transmitted from an HA to a CN is recognized by a proxy CN, which performs an actual message process as a proxy of a CN.

With this arrangement method, all of the functional entities such as CMF, TCF, MHF, MAF, and CD are accommodated in an adjacent router (proxy CN: set as a default router that the CN normally accesses). Therefore, a dedicated external interface for linking the functions is not required when being equipped. The binding update message transmitted to the CN passes through the proxy CN that serves also as a default router. However, the MHF (Message Handling Function) within the proxy CN functional group has a function for searching for the header information of all packets, and monitors a Mobile IP control message.

A detected binding update message is passed to the CMF (Cache Management Function) of the proxy CN, and reflected on the CD (Cache Data) of the CN.

The Mobile IP control message is detected as follows. The "Protocol" field of an IP header is referenced, and the packet which satisfies the following two conditions (1) and (2) is determined as a "Mobile IP control message": (1) the "Protocol" field indicates the TCP (Transmission Control Protocol) or the UDP (user Datagram Protocol); and (2) The "port number" field in the TCP/UDP header is referenced, and this field indicates a Mobile IP control message. A packet which does not satisfy these conditions is a data packet. Next, it is determined whether or not the packet which satisfies the above conditions is a binding cache management message. Specifically, the "Type" field of the Mobile IP header is referenced (e.g. Type: binding update message). If the packet is determined to be the binding cache management message, the proxy CN identifies the CN being the (original) destination of this message from the "Destination" field of the IP header. By using the information for identifying the CN in the above condition as a key, the proxy CN operates the binding cache entry (updates the binding cache) of the CN.

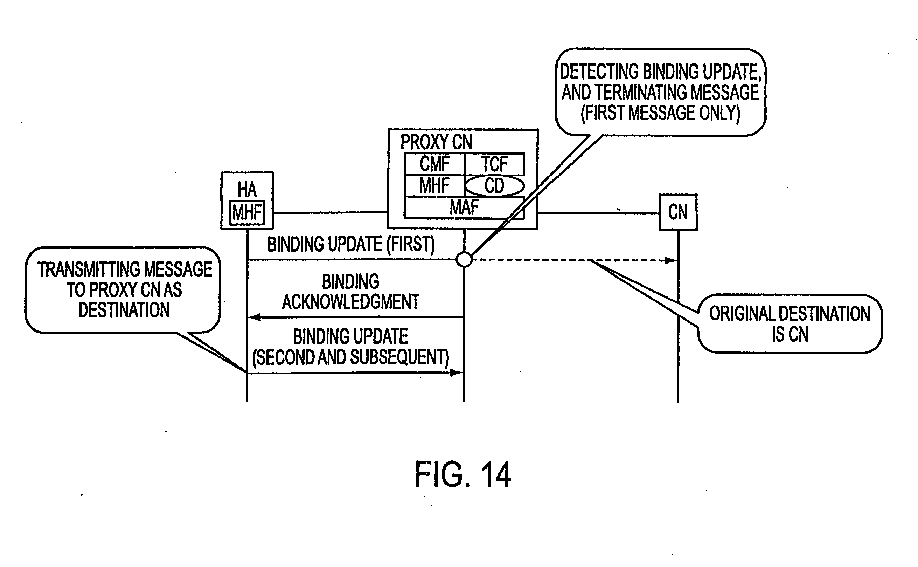

Fig. 14 shows a second preferred embodiment of the method for arranging the proxy CN functional group.

If the process for detecting a binding update message imposes a heavy load on the proxy CN as the method for arranging the proxy CN functional group, part of the function of the MHF is arranged in the HA. That is, the function for rewriting the destination of the binding update message from a default CN to a proxy CN in the HA being the transmission source of the binding update message is arranged.

Namely, the first binding update message is transferred to the proxy CN unchanged. The proxy CN terminates the first binding update message that is originally addressed to the CN, and updates the binding cache. Next, the proxy CN transmits a binding acknowledge message to the HA. With this message, the HA is requested to rewrite and transfer to a proxy CN the destination of the binding update message transmitted, which is caused by the movement of an MN. The HA transmits the second and the subsequent binding update messages to the proxy CN as requested.

As a result, the proxy CN no longer needs to perform the message detection process for the second and subsequent binding update messages, thereby reducing the load on the proxy CN.

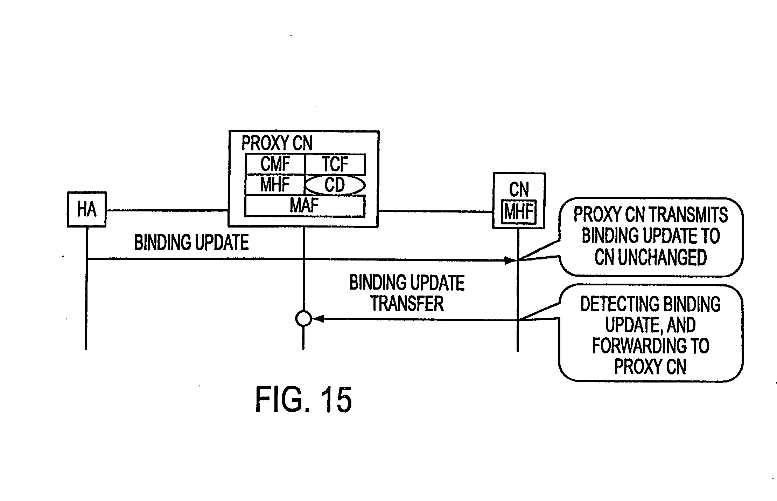

Fig. 15 shows a third preferred embodiment of the method for arranging the proxy CN functional group.

With this method for arranging the proxy CN functional group, the MHF is arranged in a CN, and the other functions in addition to the MHF are arranged within a proxy CN. A binding update message is once transmitted to the CN in a similar manner as in the technique disclosed by the application that was previously filed by this applicant. Here, the CN comprises the function for detecting the binding update message, and transferring the message to the proxy CN to which the CN is registered.

As a result, only binding update messages are transmitted from the CN to the proxy CN. Therefore, the proxy CN no longer need to examine all of messages passing through the proxy CN itself, and to determine whether or not each of the passing messages is an updated binding message, whereby also the message process load on the proxy CN itself is reduced.

Data packets other than a Mobile IP message packet, which are transmitted from the CN, are received by the proxy CN serving also as a default router, and the proxy CN alternatively performs the operations of the CN. Namely, the proxy CN determines whether or not path optimization can be applied to the CN being the transmission source of the packets, performs the service control corresponding to the CN if the CN is a terminal to which the path optimization can be applied, generates a tunneling packet with the TCF, and transmits the generated packet.

The procedures for registering a CN to a proxy CN are summarized below.

### - Registration of the CN which can use the Mobile IP

(1) The proxy CN broadcasts the above described agent advertisement of the Mobile IP to the entire network to which the proxy CN belongs.
(2) The CN equipped with the Mobile IP function receives the above described advertisement of the proxy CN, and transmits a Mobile IP registration request message to the proxy CN.
(3) The proxy CN verifies the legality of the CN according to the authentication made by an AAA server.
(4) Upon completion of the authentication, the proxy CN generates an entry of the cache data (a binding cache and a service profile) for the CN.
(5) When the registration process within the proxy CN normally terminates, registration acknowledgment is returned to the CN by using a Mobile IP registration reply message.

### - Registration of the CN which does not use the Mobile IP

(1) The CN which does not use the Mobile IP attempts to make a connection to an ISP with the dial-up PPP.
(2) The dial-up server which receives the connection request from the CN requests the authenticating server relating to the dial-up server to authenticate the legality of the CN. For the authentication method using a PPP connection, PAP (Password Authentication Protocol) or CHAP (Challenge-Handshake Authentication Protocol) is used.
(3) The authenticating server which receives the authentication request reads the service profile of the CN from the service profile DB (database) storing the service profile of the CN, when the legality of the CN is verified.
(4) The authenticating server transmits the service profile of the CN, which is obtained in the above described step (3), to the proxy CN to which the CN is requested to be registered.
(5) The proxy CN generates a visitor list entry for the CN based on the profile transmitted in the step (4), and also generates an entry for storing this entry, the binding cache relating to path optimization, and the service profile notified from the authenticating server.
(6) The authenticating server returns registration acknowledgment to the CN that issues the registration request.

The procedures for verifying the visit state of a CN are summarized below.

### - Verification of the visit state of the CN which can use the Mobile IP

(1) A mobile CN must repeatedly make a re-registration in a cycle shorter than the registration lifetime that the proxy CN and the mobile CN itself agree upon as the function of the Mobile IP, and transmits the Mobile IP registration request message to the proxy CN to which the mobile CN is currently being registered.
(2) The proxy CN determines that this mobile CN is staying in its area upon receiving the above described re-registration request.
(3) If the proxy CN does not receive the re-registration request before the registration lifetime expires, the registration of the CN is deleted with the Mobile IP procedure. Specifically, the visitor list entry for this CN is deleted within the range of the Mobile IP function. At the same time, the binding cache and the service profile, which are associated with this visitor list entry, are deleted. Namely, the data regarding the proxy CN function are deleted simultaneously with the registration deletion procedure of the Mobile IP.

### - Verification of the visit state of the CN which cannot use the Mobile IP

### Method 1

(1) The proxy CN monitors the flow of the packets transmitted from the CN. The proxy CN uses part of a visitor list entry, and registers the visit state for each CN. When the CN is transmitting packets during the registration, its state is recognized to be a staying state.
(2) If no packets transmitted from the CN are detected to flow for a predetermined time period during the above described monitoring operation, the proxy CN considers that the CN has possibly left the area, and sets the visit state of the CN to a pending state.
(3) If no packets from the CN are detected to be transmitted for another predetermined time period in the above described pending state, the proxy CN determines that the CN got out of the area.
(4) If the packets from the CN are detected during the packet monitoring time period in the above described step (3), the visit state is restored to the staying state.

### Method 2

(1) The cycle monitoring task running within the proxy CN searches for the preceding packet transmission verification time (verification time stamp) for all of the CNs under its management.
(2) The cycle monitoring task obtains for each CN the difference between the verification time stamp and the current time. If this time difference is larger than the value stipulated within the proxy CN, the CN is determined to have not transmitted packets for a predetermined time period or longer, and its registration is deleted.
(3) If the time difference is smaller than the stipulated value, the CN is determined to stay in the area, and its packets are attempted to be detected. If the packets are detected as a result, the verification time stamp is updated to the latest packet detection time. If the packets are not detected, the verification time stamp is not updated.
(4) These steps (1) through (4) are repeated in the cycle stipulated by the proxy CN system, so that cyclic visit state verification can be implemented.

### - Line disconnection of a link layer if the Mobile IP is unavailable

(1) A CN is assumed to be connected to an access server with the PPP.
(2) Upon completion of the communication by the CN, the line disconnection message of the link layer is transmitted to an access server.
(3) The access server that detects the line disconnection message notifies the MHF of the proxy CN functional group of the line disconnection by the CN.
(4) The MHF of the proxy CN functional group transmits the message indicating that the CN left the area to the MAF.
(5) The MAF deletes the visitor list entry for the CN, and at the same time, it requests the CMF to delete the binding cache and the service profile for this CN. Here, the registration deletion of the CN is completed.

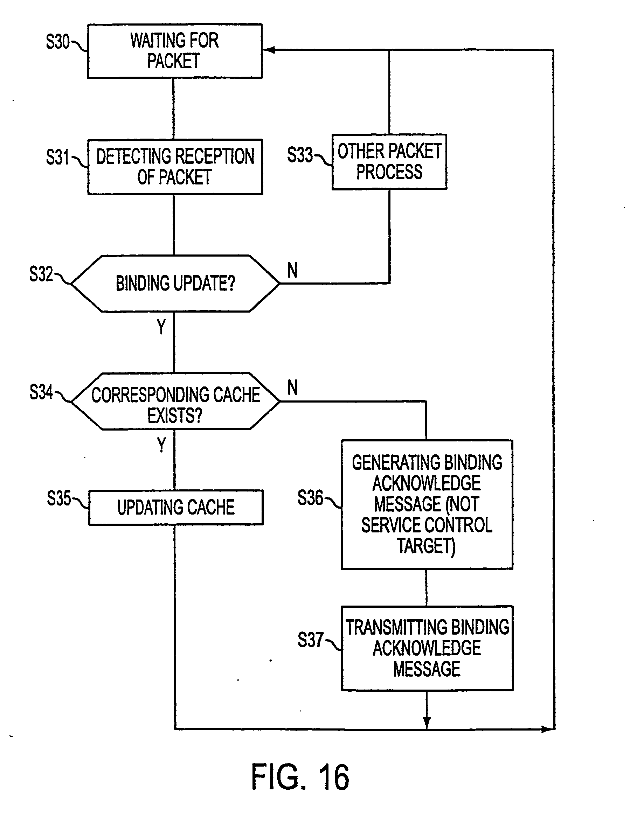

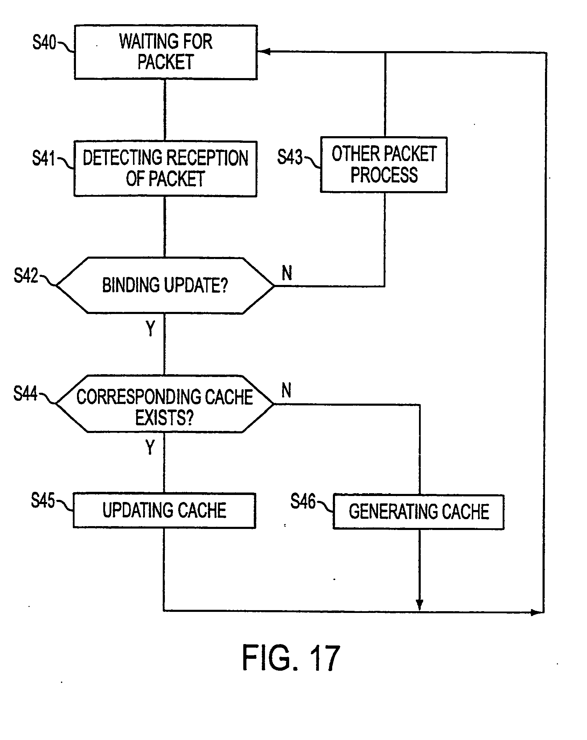

Figs. 16 and 17 are flowcharts explaining the IP service control message process in the preferred embodiment shown in Fig. 13. Fig. 16 shows the case where a cache area is generated upon completion of the registration of a CN to a proxy CN, whereas Fig. 17 shows the case where a cache area is generated when the first binding update message of the CN reaches the proxy CN.

In Fig. 16, if there is a cache of the terminal(CN) to be targeted as a service profile which is added to a binding update message, the cache is only updated. However, if no cache area exists due to some cause or another (a lack of resource, etc.), an abnormal sequence is adopted. In this case, the proxy CN can notify the HA being the transmission source that the received cache was not properly processed. A "binding acknowledge" message, which is defined by the Mobile IP expansion protocol (path optimization), is used as this notification.

Therefore, if a cache cannot be generated, the proxy CN generates the binding acknowledge message, stores the value indicating that the cache was not properly processed by the proxy CN itself being the reception destination, and transmits the message to the HA.

In Fig. 16, the HA first transmits the binding update message (including a profile cache) to the CN to be path-optimized. The binding update message reaches the proxy CN which serves also as a default router for the destination CN. The proxy CN waits for a packet in step S30, and detects the reception of the packet in step S31, searches for each header of all of the received packets (regardless of their data and Mobile IP control message), and determines whether or not each packet is a binding update message addressed to the CN (step S32). A method for determining whether or not a packet is a binding update message is as follows. Namely, the packet which satisfies the following two conditions is determined to be a Mobile IP control message by referencing the "Protocol field" of an IP header: (1) the "Protocol" field indicates either TCP or UDP; and (2) the "Port number" field within the TCP/UDP header indicates a mobile IP control message. If a received packet is a data packet, a different packet process is performed in step S33, and control is then returned to step S30.

If the packet is determined to be a binding update message in step S32, it is further determined whether or not the binding update message packet is a binding cache management message for path optimization by examining the corresponding packet field. Specifically, the "Type" field in the Mobile IP header is referenced (e.g. "Type" is a binding update message). If the packet is determined to be a binding cache management message, the proxy CN identifies the CN being the (original) destination of this message from the "Destination" field in the IP header. For the packet which is determined to be the binding update message, it is determined whether or not the cache corresponding to the destination CN exists in step S34. If the corresponding cache exists, it is stored in the binding cache and the service profile cache, which are held by the proxy cache, and it is also operated by the proxy CN functional group. The proxy CN then performs the operations and functions, which are requested of the CN being the original destination. If no corresponding cache exists in step S34, a binding acknowledge message indicating "not a service control target" is generated in step S36. The generated message is then transmitted in step S37, and control is returned to step S30.

Fig. 17 is a flowchart showing the packet process performed in the case where a cache area is generated in the proxy CN when the first binding update message from a CN reaches the proxy CN.

In this flow, the process which is performed when no corresponding cache exists is different. Namely, upon receipt of the first binding update message (plus the service profile cache) for the CN, a cache area is newly generated, and the data of the service profile cache is stored in this area.

First of all, in step S40, the proxy CN waits for a packet. Then, the proxy CN detects the reception of the packet in step S41, and determines whether or not the received packet is a binding update message in step S42. If the packet is determined not to be the binding update message, the proxy CN performs the different process in step S43. If the packet is determined to be the binding update message, the process goes to step S44.

The proxy CN determines whether or not the binding cache (or just cache) corresponding to the CN being the message destination exists in step S44. If the corresponding binding cache exists, the proxy CN updates the cache. If the corresponding cache does not exist, the proxy CN generates a cache. The process then goes back to step S40.

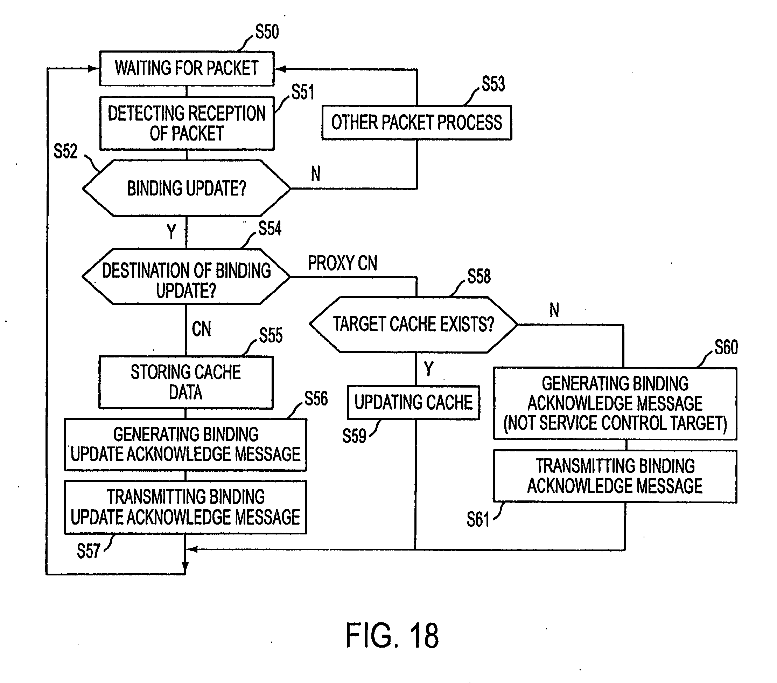

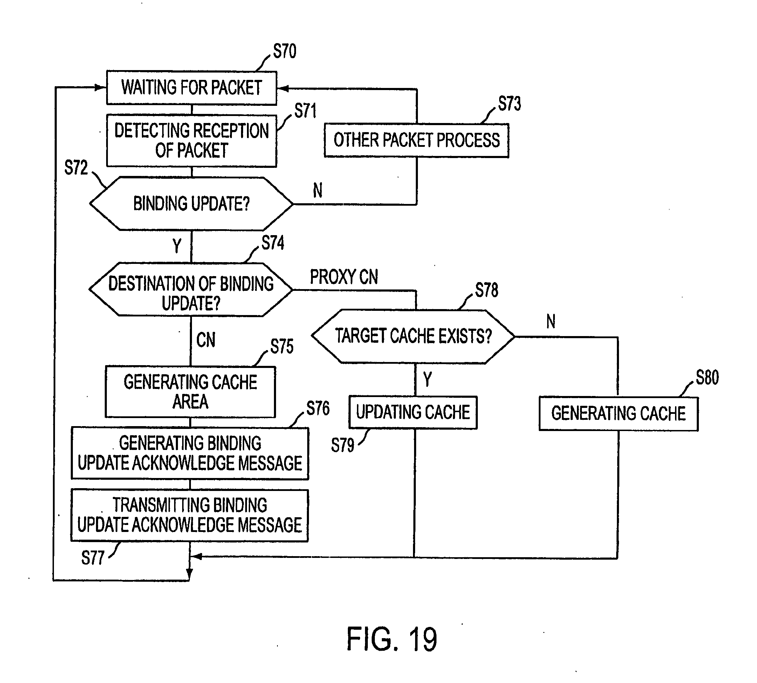

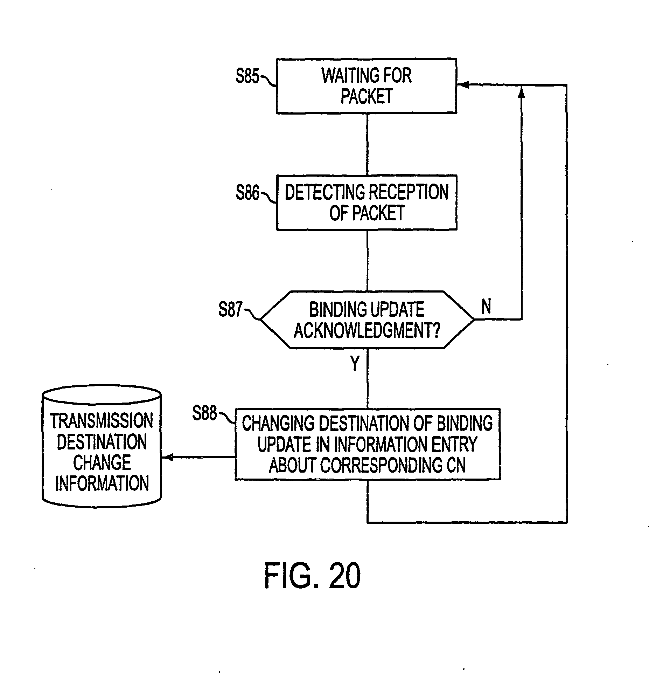

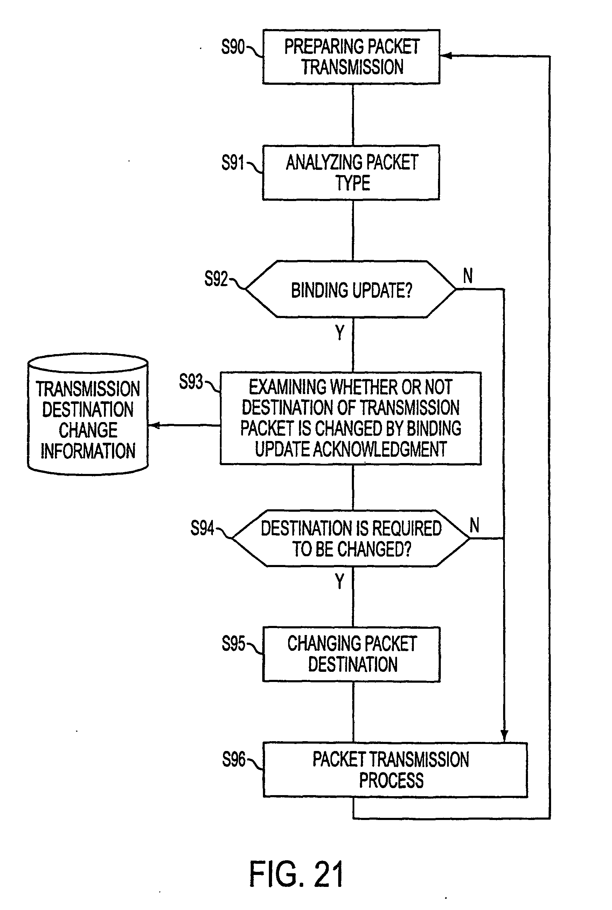

Figs, 18 through 21 are flowcharts showing the IP service control message process in the preferred embodiment shown in Fig. 14. Fig. 18 shows the case where a cache area is generated upon completion of the registration of a CN to a proxy CN, whereas Fig. 19 shows the case where a cache area is generated when the first binding update message of the CN reaches the proxy CN. Fig. 20 summarizes the packet process performed by each functional entity, and shows the reception determination process by the HA. Fig. 21 summarizes the packet process performed by each functional entity, and shows the transmission process determination made by the HA.

First of all, the HA transmits the first binding update message to the HA as a destination. The proxy CN waits for a packet in step S50, and detects the reception of a packet in step S51. The proxy CN then determines whether or not the received packet is a binding update message in step S52. If the packet is not the binding update message, the proxy CN performs a different packet process in step S53, and control is returned to step S50. If the received packet is determined to be the binding update message in step S52, the proxy CN being the default router of the CN examines the destination of the binding update message. If the destination is the proxy CN, the proxy CN determines whether or not a target cache exists in step S58. If the target cache exists, the proxy CN updates the cache in step S59. If the target cache does not exist, the proxy CN generates a binding acknowledge message in step S60, and transmits this message in step S61. Then, control is returned to step S50.

If the destination of the binding update message is the CN in step S54, the proxy CN generates and holds the binding cache and the service profile cache (step S55), which are included in the message, without transmitting this binding update message to the CN being the original destination. Then, the MHF within the proxy CN returns the binding update acknowledge message to the HA being the transmission source of the binding update message as a specific message (steps S56 and S57). This message declares that the proxy CN processes binding update messages which are transmitted thereafter as a proxy of the CN.

If the default router does not comprise the proxy CN functions, the binding update message is transmitted to the CN, and the CN itself processes the binding update message.

The HA that receives the binding update acknowledge message associates the proxy CN being the transmission source with the information of the CN which is the original destination and is under the control of the proxy CN, changes to the proxy CN the destination of the second and the subsequent binding update messages transmitted to the CN, and transmits the messages. Accordingly, the proxy CN receives and processes the second and the subsequent binding update messages relating to the CN.

Fig. 19 shows the process performed by a proxy CN in the case where a cache area is generated when the first binding update message of a CN reaches the proxy CN.

First of all, in step S70, the proxy CN waits for a packet. In step S71, the proxy CN detects the reception of the packet. The proxy CN then determines whether or not the received packet is a binding update message in step S72. If the received packet is not the binding update message, the proxy CN performs a different packet process in step S73. Control is then returned to step S70.

If the received packet is determined to be the binding update message in step S72, the proxy CN examines the destination of this message. If the destination is the proxy CN, the proxy CN further determines whether or not a cache to be updated exists in step S78. If the cache to be updated exists, the proxy CN updates the cache in step S79. If the corresponding cache does not exist, the proxy CN generates a cache.

If the destination of the binding update message is the CN in step S74, the proxy CN generates a cache area, further generates a binding update acknowledge message, and transmits the generated message to the HA (steps S76 and S77).

Fig. 20 summarizes the packet process performed by each functional entity in the preferred embodiment shown in Fig. 14, and is a flowchart showing the reception process determination made by an HA.

The HA waits for a packet in step S85. When the packet is transmitted, the HA detects the reception of the packet in step S86. In step S87, the HA determines whether or not the received packet is a binding update acknowledge message. If the received packet is not the binding update acknowledge message, control is returned to step S85 where the HA will wait for the next packet. If the received packet is determined to be the binding update acknowledge message in step S87, the HA changes the destination of the binding update message within the information entity for the corresponding CN. Control is then returned to step S85 where the HA will wait for the subsequent packet.

Fig. 21 summarizes the packet process performed by each functional entity in the preferred embodiment shown in Fig. 14, and is a flowchart showing the transmission process determination by the HA.

First of all, in step S90, the HA completes the preparation for a packet transmission. The HA analyzes the packet type in step S91, and determines whether or not a received packet is a binding update message in step S92. If the received packet is not the binding update message, the HA performs the packet transmission process in step S96 (the process for transmitting a packet to its destination). Control is then returned to step S90. If the received packet is determined to be the binding update message in step S92, the HA examines whether or not the destination of the transmission packet is changed according to binding update acknowledgment (step S93), and determines whether or not the destination of the binding update message must be changed in step S94. If the HA determines that there is no need to change the destination in step S94, the HA transmits the packet to the destination of the received packet in step S96. If the HA determines that the destination must be changed in step S94, it changes the destination of the packet in step S95, and transmits the packet to the changed destination (proxy CN) in step S96. Upon completion of the packet transmission process, control is returned to step S90 and this process is repeated.

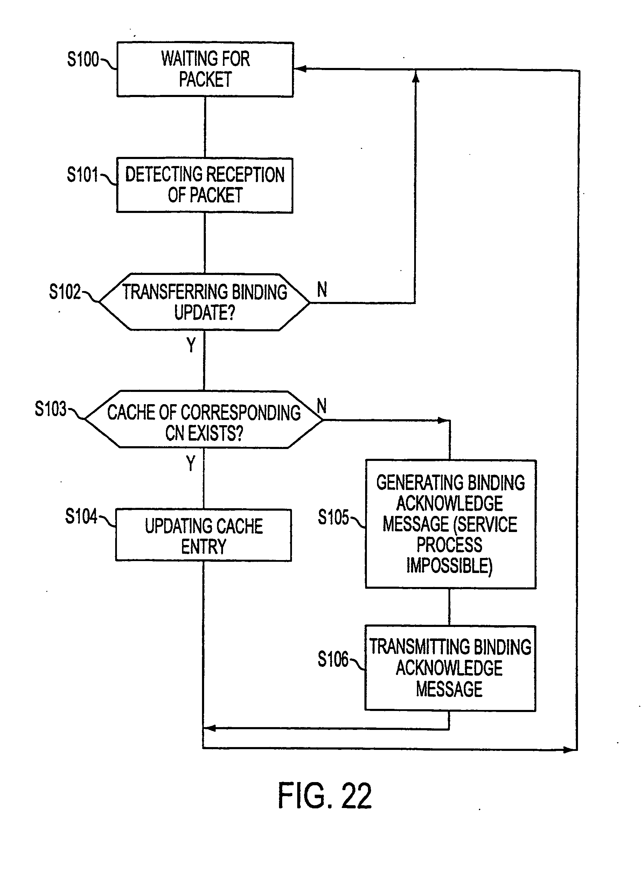

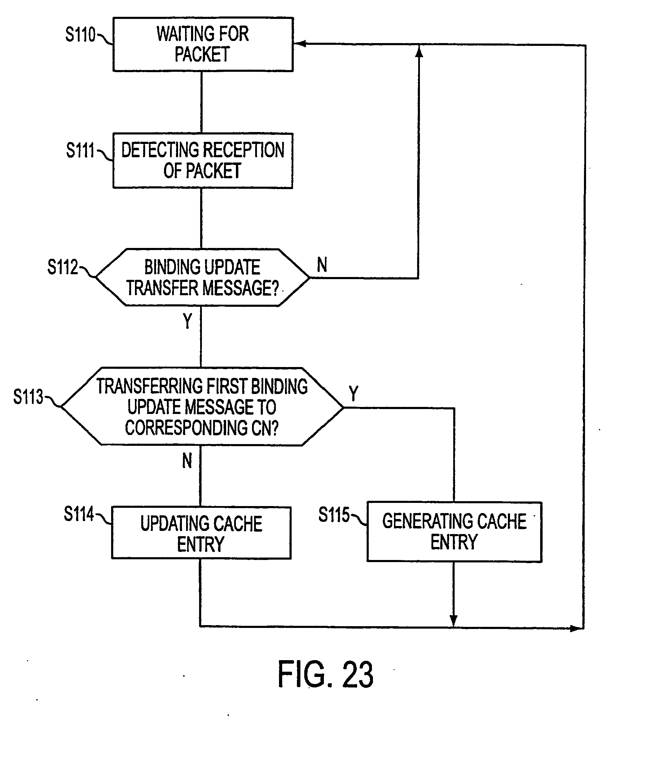

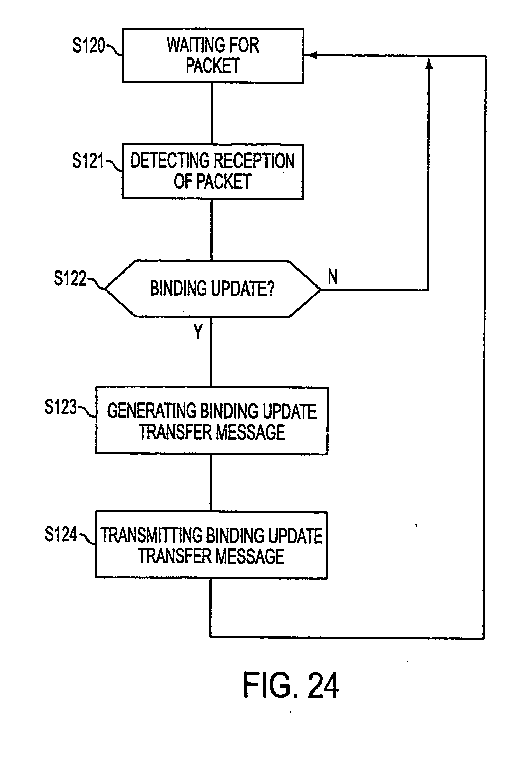

Figs. 22 through 24 are flowcharts showing the IP service control message process in the preferred embodiment shown in Fig. 15. Fig. 22 shows the case where a cache area is generated upon completion of the registration of a CN to a proxy CN, whereas Fig. 23 shows the case where a cache area is generated when the first binding update message of the CN reaches the proxy CN. Fig. 24 is a flowchart showing the determination process performed by the CN among the summarized packet processes of the respective functional entities.

In Fig. 22 the HA first transmits a binding update message to the CN as a destination. The proxy CN being the default router of the CN receives this message (step S101) while it is in a packet wait state (step S100). The HA then determines whether or not the received message is a binding update message, and whether or not to transfer this message to the CN (step S102). If this message is determined to be a message to be transferred, the proxy CN transfers the message to the CN similar to a normal router. Control is then returned to step S100.

If the proxy CN determines that the message is the binding update transfer message, that is, the message addressed to the proxy CN itself in step S102, it further determines whether or not the cache corresponding to the CN exists in step S103. If the corresponding cache exists, the cache entry is updated in step S104. Control is then returned to step S100. If the corresponding cache is determined not to exist in step S103, a binding acknowledgment message is generated in step S105. In step S106, the CN detects that the packet which is transmitted and received from the proxy CN is the binding update message. Here, the CN which detects the binding update message structure of a binding update transfer message as its specific message, and transmits the structured message to the proxy CN to which the CN itself is registered. This message includes the information that the proxy CN can recognize to be a binding update message as header information, and binding cache data and service profile data, which are included in the binding update message, as payload information. The proxy CN that receives the binding update transfer message transmitted from the CN under its control, verifies that this message is a binding update transfer message based on the header information. The proxy CN registers the data for this CN, which is included in the verified message.

Fig. 23 is a flowchart showing the process performed by a proxy CN in the case where a cache area is generated when the first binding update message reaches the proxy CN.

First of all, in step S110, the proxy CN waits for a packet. When the proxy CN detects the reception of the packet in step S111, it determines whether or not the received packet is a binding update message, and whether or not the message is to be transferred to the CN in step S112. If the message is determined not to be transferred to the CN, control is returned to step S110. Then, this process is repeated.

If the received packet is determined to be a binding update transfer message in step S112, the proxy CN further determines whether or not this message is the first binding update transfer message to the CN in step S113. If the message is the first binding update transfer message, the proxy CN generates a cache entry in step S115. Control is then returned to step S110. If the message is not the first binding update transfer message in step S113, the proxy CN updates the corresponding cache entry in step S114. Then, control is returned to step S110.

Fig. 24 is a flowchart showing the determination process performed by the CN.

First of all, in step S120, the CN waits for a packet in step S120. Upon receiving the packet in step S121, the CN determines whether or not the received packet is a binding update message in step S122. If the packet is not the binding update message, control is returned to step S120 where the CN again waits for a packet. If the received packet is determined to be the binding update message in step S122, the CN generates a binding update transfer message in step S123, and transmits the generated message to the proxy CN in step S124. Control is then returned to step S120.

The process for a data packet which is not a binding update message is explained below.
(1) A CN under the control of a proxy CN transmits the data packet to a particular MN.
(2) The above described data packet reaches the proxy CN which serves also as a default router.
(3) The proxy CN identifies the transmission source of this data packet, and searches a visitor list for the corresponding entry.
(4) Whether or not the CN is a path optimization target is made according to the visitor list entry of the CN being the transmission source.
(5) If the packet transmitted from the CN is determined to be a path optimization target, the proxy CN passes control to the TCF (Tunneling Capability Function), and requests the TCF to generate a tunneling packet.
(6) The TCP generates a tunneling packet, passes the data and control of the packet to a router function unit within the proxy CN, and requests the unit to transmit this packet.
(7) The router function unit within the proxy CN transmits the generated tunneling packet.

As described above, the present invention was explained based on the particular preferred embodiment. However, the present invention is not limited to the above described preferred embodiment, and covers various modifications made by a person having ordinary skill in the art.

Especially, the arrangement of the above described functions such as CMF, TCF, MHF, CD, and MAF is not limited to the above described preferred embodiment. The functions may suffice to be arranged in any locations on a network side to which a CN is connected.

According to the present invention, the functional group which is forced to be arranged in a correspondent terminal (CN) conventionally is concentrated on a network side, whereby equivalent functions can be provided without adding functions to the CN (or by making a minimum addition).

Accordingly, even a portable terminal with a low throughput can use an individual service control without concern about a functional addition and an increase in a processing load.

Furthermore, according to the present invention, the function for accepting the registration of a CN with a link layer, which cannot use a particular protocol, is prepared as a method for registering a CN to an adjacent router (proxy CN) equipped with the functional group concentrated on a network side in addition to a method using the registration mechanism of the particular protocol, thereby securing the independence from the link layer.

Accordingly, registration to a proxy CN and use of an individual service control can be implemented even with various link layers.

## Claims

1. A mobile communications system composed of a plurality of sub-networks and for enabling a correspondent terminal (25) to communicate with a mobile terminal (12), the mobile terminal (12) having means to move from one sub-network (1) to another sub-network (2), and including an authentication unit (23) for authenticating said correspondent terminal (25); **characterized by**:
a setting unit for setting binding cache information that the correspondent terminal (25) requires to communicate with the mobile terminal (12) and updating the binding cache information when the mobile terminal (12) moves from a first sub-network (1) to a second sub-network (2) the setting unit providing a cache management function for a binding cache and having means to detect a binding cache, to generate an entry if an entry for said binding cache does not exist, and to update an entry with received information if the binding cache already exists; and
a communicating unit for communicating between network controlling devices in order to set the binding cache information, the communicating unit having means for detecting a binding cache message, for determining whether a cache corresponding to a destination correspondent terminal exists, and if it exists for updating the binding cache, and if it does not exist for generating and transmitting a binding acknowledgement message,
wherein the authentication unit, the setting unit and the communicating unit are installed in a proxy correspondent terminal (24) in a network comprising the plurality of sub-networks; and
wherein the authentication unit (23) comprises a link layer authentication server to authenticate a said correspondent terminal when said correspondent terminal cannot use Mobile IP, and wherein the proxy correspondent terminal includes means to authenticate a said correspondent terminal when said correspondent terminal can use the Mobile IP.

2. The mobile communications system according to claim 1, further **characterized in that** a Mobile IP is adopted as a communication protocol.

3. The mobile communications system according to claim 2, further **characterized in that** said correspondent terminal (25) does not support the Mobile IP.

4. The mobile communications system according to claim 2, further **characterized by**:
a tunneling unit for editing a data packet received from said correspondent terminal (25) and destined for the mobile terminal (12) and for transmitting the edited data packet directly to the first sub-network (1) when said correspondent terminal (25) exists in the first sub-network (1) and the mobile terminal (12) exists in the second sub-network (2).

5. The mobile communications system according to claim 1, further **characterized in that** said correspondent terminal (25) is a terminal which can move from one sub-network (1) to another sub-network (2).

6. The mobile communications system according to claim 1, further **characterized by**:
a router (24) coupled to said correspondent terminal (25), wherein said setting unit and said communicating unit are arranged in said router (24).

7. The mobile communications system according to claim 2, further **characterized by**:
visit state verifying means for determining whether or not said correspondent terminal (25) exists in a predetermined area.

8. The mobile communications system according to claim 7, further **characterized by**:
means, operative if said correspondent terminal (25) does not exist in the predetermined area, to delete the binding cache information for said correspondent terminal (25).

9. The mobile communications system according to claim 2, further **characterized by**:
means, operative if said correspondent terminal (25) is a Mobile IP correspondent terminal (25), to determine that said correspondent terminal (25) has left a predetermined area when the correspondent terminal (25) does not make a registration in the predetermined area.

10. The mobile communications system according to claim 7, further **characterized in that**
said visit state verifying means determines that said correspondent terminal (25) no longer exists in the predetermined area by detecting that packets relating to said correspondent terminal (25) are not transmitted and received.

11. A mobile communications method for enabling a correspondent terminal (25) to communicate with a mobile terminal (12) in a network composed of a plurality of sub-networks having network controlling devices, and for continuing to communicate even when the mobile terminal (12) moves from one sub-network (1) to another sub-network (2), including the step of authenticating the correspondent terminal (25); and **characterized by** the steps of setting binding cache information that the correspondent terminal (25) requires to communicate with the mobile terminal (12);
updating the binding cache information when the mobile terminal (12) moves from a first sub-network (1) to a second sub-network (2); and
communicating the binding cache information between the network controlling devices in order to set the binding cache information,
wherein the authentication step, the setting step and the communicating step are executed in a proxy correspondent terminal (24) in a network comprising the plurality of sub-networks, and
wherein the setting and updating steps include managing binding caches, detecting a said binding cache, generating an entry of an entry for said binding cache does not exist, and updating an entry with received information of the binding cache if the binding cache already exists, the communicating step includes detecting a binding cache message, determining whether a cache corresponding to a destination correspondent terminal exists, updating a binding cache if it exists, and generating and transmitting a binding acknowledgement message if it does not exist, and wherein the authentication step includes authenticating a said correspondent terminal by means of a link layer authenticating server when said correspondent terminal cannot use Mobile IP, and authenticating said correspondent terminal by the proxy correspondent terminal when the correspondent terminal can use the Mobile IP.

12. The mobile communications method according to claim 11, further **characterized in that** a Mobile IP is adopted as a communication protocol in the mobile communications method.

13. The mobile communications method according to claim 12, further **characterized in that** the correspondent terminal (25) does not support the Mobile IP.

14. The mobile communications method according to claim 12, further **characterized by**:
editing a data packet received from the correspondent terminal (25) and destined for the mobile terminal (12); and transmitting the edited data packet directly to the second sub-network (2), and making the data packet reach the mobile terminal (12), when the correspondent terminal (25) exists in the first sub-network (1) and the mobile terminal (12) exists in the second sub-network (2).

15. The mobile communications method according to claim 11, further **characterized in that** the correspondent terminal (25) is a terminal which can move among the plurality of sub-networks.

16. The mobile communications method according to claim 11, further **characterized in that** the setting and communicating steps are performed in a router (24) coupled to the correspondent terminal (25).

17. The mobile communications method according to claim 12, further **characterized by**:
determining whether or not the correspondent terminal (25) exists in a predetermined area, wherein the predetermined area is an area where the correspondent terminal (25) may access the network.

18. The mobile communications method according to claim 17, further **characterized in that**
if the correspondent terminal (25) does not exist in the predetermined area, the binding cache information for the correspondent terminal (25) are deleted.

19. The mobile communications method according to claim 12, further **characterized in that**
if the correspondent terminal (25) is a Mobile IP correspondent terminal (25), determining that the correspondent terminal (25) has left a predetermined area when the correspondent terminal (25) does not make a registration to the predetermined area.

20. The mobile communications method according to claim 17, further **characterized in that**
the visit state verifying step determines that the correspondent terminal (25) no longer exists in the predetermined area by detecting that packets are not transmitted and received by the correspondent terminal (25).

## Patentansprüche

1. Ein Mobilkommunikationssystem zusammengesetzt aus einer Vielzahl von Unternetzwerken und zum Ermöglichen eines Korrespondenzendgerät (25) zum Kommunizieren mit einem Mobilendgerät (12), wobei das Mobilendgerät (12) eine Einrichtung aufweist zum Bewegen von einem Unternetzwerk (1) zu einem anderen Unternetzwerk (2) und eine Authentifizierungseinheit (23) enthält zum Authentifizieren des Korrespondenzendgeräts (25); **gekennzeichnet durch**:
eine Einstelleinheit zum Einstellen einer Binde-Cache-Information bzw. Bindezwischenspeicherinformation, die das Korrespondenzendgerät (25) benötigt zum Kommunizieren mit dem Mobilendgerät (12) und Aktualisieren der Binde-Cache-Information, wenn das Mobilendgerät (12) sich von einem ersten Unternetzwerk (1) zu einem zweiten Unternetzwerk (2) bewegt, wobei die Einstelleinheit eine Cache-Managementfunktion bereitstellt für einen Binde-Cache und eine Einrichtung aufweist zum Detektieren eines Binde-Caches zum Erzeugen eines Eintrags, falls ein Eintrag für den Binde-Cache nicht existiert, und zum Aktualisieren eines Eintrags mit empfangener Information, falls der Binde-Cache schon existiert; und
eine Kommunikationseinheit zum Kommunizieren zwischen Netzwerksteuergeräten, um die Binde-Cache-Information einzustellen, wobei die Kommunikationseinheit eine Einrichtung zum Detektieren einer Binde-Cache-Nachricht aufweist, zum Bestimmen, ob ein Cache entsprechend einem Zielkorrespondenzendgerät existiert, und falls er existiert, zum Aktualisieren des Binde-Caches, und falls er nicht existiert, zum Erzeugen und Übertragen einer Bindebestätigungsnachricht,
wobei die Authentifizierungseinheit, die Einstelleinheit und die Kommunikationseinheit installiert werden in einem Proxy-Korrespondenzendgerät (24) in einem Netzwerk umfassend die Vielzahl der Unternetzwerke; und
wobei die Authentifizierungseinheit (23) einen Verbindungsschichtauthentifizierungs-Server zum Authentifizieren des Korrespondenzendgeräts umfasst, wenn das Korrespondenzendgerät nicht einen Mobil-IP verwenden kann, und wobei das Proxy-Korrespondenzendgerät eine Einrichtung enthält zum Authentifizieren des Korrespondenzendgeräts, wenn das Korrespondenzendgerät die Mobil-IP verwenden kann.

2. Das Mobilkommunikationssystem nach Anspruch 1, ferner **dadurch gekennzeichnet, dass** eine Mobil-IP adoptiert wird als Kommunikationsprotokoll.

3. Das Mobilkommunikationssystem nach Anspruch 2, ferner **dadurch gekennzeichnet, dass** das Korrespondenzendgerät (25) nicht das Mobil-IP unterstützt.

4. Das Mobilkommunikationssystem nach Anspruch 2, ferner **gekennzeichnet durch**:
eine Tunneleinheit zum Editieren eines Datenpakets, empfangen von dem Korrespondenzendgerät (25) und bestimmt für das Mobilendgerät (12), und zum Übertragen des editierten Datenpakets direkt an das erste Unternetzwerk (1), wenn das Korrespondenzendgerät (25) in dem ersten Unternetzwerk (1) existiert, und das Mobilendgerät (12) in dem zweiten Unternetzwerk (2) existiert.

5. Das Mobilkommunikationssystem nach Anspruch 1, ferner **dadurch gekennzeichnet, dass** das Korrespondenzendgerät (25) ein Endgerät ist, das von einem Unternetzwerk (1) an ein anderes Unternetzwerk (2) sich bewegen kann.

6. Das Mobilkommunikationssystem nach Anspruch 1, ferner **gekennzeichnet durch**:
einen Router (24), gekoppelt mit dem Korrespondenzendgerät (25), wobei die Einstelleinheit und die Kommunikationseinheit angeordnet sind in dem Router (24).

7. Das Mobilkommunikationssystem nach Anspruch 2, **gekennzeichnet durch**:
eine Besuchszustandsverifiziereinrichtung zum Bestimmen, ob oder ob nicht das Korrespondenzendgerät (25) in einem vorbestimmten Bereich existiert.

8. Das Mobilkommunikationssystem nach Anspruch 7, ferner **gekennzeichnet durch**:
eine Einrichtung, betriebsfähig, falls das Korrespondenzendgerät (25) nicht existiert in dem vorbestimmten Bereich, zum Löschen der Binde-Cache-Information für das Korrespondenzendgerät (25).

9. Das Mobilkommunikationssystem nach Anspruch 2, ferner **gekennzeichnet durch**:
eine Einrichtung, betriebsfähig, falls das Korrespondenzendgerät (25) ein Mobil-IP-Korrespondenzendgerät (25) ist, zum Bestimmen, dass das Korrespondenzendgerät (25) einen vorbestimmten Bereich verlassen hat, wenn das Korrespondenzendgerät (25) nicht eine Registrierung in dem vorbestimmten Bereich ausführt.

10. Das Mobilkommunikationssystem nach Anspruch 7, ferner **dadurch gekennzeichnet, dass**
die Besuchszustandsverifiziereinrichtung bestimmt, dass das Korrespondenzendgerät (25) nicht länger in dem vorbestimmten Bereich existiert durch Detektieren, dass Pakete bezüglich dem Korrespondenzendgerät (25) nicht empfangen und übertragen werden.

11. Ein Mobilkommunikationsverfahren zum Erlauben eines Korrespondenzendgeräts (25) zum Kommunizieren mit einem Mobilendgerät (12) in einem Netzwerk, zusammengesetzt aus einer Vielzahl von Unternetzwerken mit Netzwerksteuergeräten, und zum Weiterführen einer Kommunikation, selbst wenn das Mobilendgerät (12) sich von einem Unternetzwerk (1) zu einem anderen Unternetzwerk (2) bewegt, einschließlich dem Schritt eines Authentifizierens des Korrespondenzendgeräts (25); und **gekennzeichnet durch** die Schritte eines Einstellens von Binde-Cache-Information, die das Korrespondenzendgerät (25) benötigt zum Kommunizieren mit dem Mobilendgerät (12);
Aktualisieren der Binde-Cache-Information, wenn das Mobilendgerät (12) sich bewegt von einem ersten Unternetzwerk (1) zu einem zweiten Unternetzwerk (2); und
Kommunizieren der Binde-Cache-Information zwischen den Netzwerksteuergeräten, um die Binde-Cache-Information einzustellen,
wobei der Authentifizierungsschritt, der Einstellschritt und der Kommunikationsschritt ausgeführt werden in einem Proxy-Korrespondenzendgerät (24) in einem Netzwerk, umfassend die Vielzahl der Unternetzwerke, und
wobei der Einstell- und Aktualisierschritt Verwalten von Binde-Caches enthält, Detektieren des Binde-Caches, Erzeugen eines Eintrags eines Eintrags für den Binde-Cache, dass dieser nicht existiert, und Aktualisieren eines Eintrags mit empfangener Information des Binde-Caches, falls der Binde-Cache schon existiert, der Kommunikationsschritt enthält Detektieren einer Binde-Cache-Nachricht, Bestimmen, ob ein Cache entsprechend einem Zielkorrespondenzendgerät existiert, Aktualisieren eines Binde-Caches, falls es existiert, und Erzeugen und Übertragen einer Bindebestätigungsnachricht, falls er nicht existiert, und wobei der Authentifizierungsschritt ein Authentifizieren des Korrespondenzendgeräts enthält mittels eines Verbindungsschichtauthentifizierungs-Servers, wenn das Korrespondenzendgerät Mobil-IP nicht verwenden kann, und Authentifizieren des Korrespondenzendgeräts **durch** das Proxy-Korrespondenzendgerät, wenn das Korrespondenzendgerät die Mobil-IP verwenden kann.

12. Das Mobilkommunikationsverfahren nach Anspruch 11, ferner **dadurch gekennzeichnet, dass** eine Mobil-IP adoptiert wird als Kommunikationsprotokoll in dem Mobilkommunikationsverfahren.

13. Das Mobilkommunikationsverfahren nach Anspruch 12, ferner **dadurch gekennzeichnet, dass** das Korrespondenzendgerät (25) nicht Mobil-IP unterstützt.

14. Das Mobilkommunikationsverfahren nach Anspruch 12, ferner **gekennzeichnet durch**:
Editieren eines Datenpakets, empfangen von dem Korrespondenzendgerät (25), und bestimmt für das Mobilendgerät (12); und Übertragen des editierten Datenpakets direkt an das zweite Unternetzwerk (2) und Hervorrufen, dass das Datenpaket das Mobilendgerät (12) erreicht, wenn das Korrespondenzendgerät (25) existiert in dem ersten Unternetzwerk (1) und das Mobilendgerät in dem zweiten Unternetzwerk (2) existiert.

15. Das Mobilkommunikationsverfahren nach Anspruch 11, ferner **dadurch gekennzeichnet, dass** das Korrespondenzendgerät (25) ein Endgerät ist, das unter der Vielzahl von Unternetzwerken sich bewegen kann.

16. Das Mobilkommunikationsverfahren nach Anspruch 11, ferner **dadurch gekennzeichnet, dass** die Einstell- und Kommunikationsschritte ausgeführt werden in einem Router (24), gekoppelt an das Korrespondenzendgerät (25).

17. Das Mobilkommunikationsverfahren nach Anspruch 12, ferner **gekennzeichnet durch**:
Bestimmen, ob oder ob nicht das Korrespondenzendgerät (25) existiert in einem vorbestimmten Bereich, wobei der vorbestimmte Bereich ein Bereich ist, wo das Korrespondenzendgerät (25) auf das Netzwerk zugreifen kann.

18. Das Mobilkommunikationsverfahren nach Anspruch 17, ferner **dadurch gekennzeichnet, dass**
falls das Korrespondenzendgerät (25) nicht existiert in dem vorbestimmten Bereich, die Binde-Cache-Information für das Korrespondenzendgerät (25) gelöscht wird.

19. Das Mobilkommunikationsverfahren nach Anspruch 12, ferner **dadurch gekennzeichnet, dass**
falls das Korrespondenzendgerät (25) ein Mobil-IP-Korrespondenzendgerät (25) ist, Bestimmen, dass das Korrespondenzendgerät (25) einen vorbestimmten Bereich verlassen hat, wenn das Korrespondenzendgerät (25) nicht eine Registrierung bei dem vorbestimmten Bereich ausführt.

20. Das Mobilkommunikationsverfahren nach Anspruch 17, ferner **dadurch gekennzeichnet, dass**
der Besuchszustandsverifizierschritt bestimmt, dass das Korrespondenzendgerät (25) nicht länger in dem vorbestimmten Bereich existiert durch Detektieren, dass Pakete nicht übertragen und empfangen werden durch das Korrespondenzendgerät (25).

## Revendications

1. Un système de communication mobile composé d'une multiplicité de sous-réseaux et destiné à permettre à un terminal de correspondant (25) de communiquer avec un terminal mobile (12), le terminal mobile (12) ayant un moyen pour passer d'un sous-réseau (1) à un autre sous-réseau (2), et incluant une unité d'authentification (23) pour authentifier ledit terminal de correspondant (25); **caractérisé par** :
une unité d'établissement pour établir une information de table d'association dont le terminal de correspondant (25) a besoin pour communiquer avec le terminal mobile (12) et actualiser l'information de table d'association lorsque le terminal mobile (12) se déplace d'un premier sous-réseau (1) vers un deuxième sous-réseau (2), l'unité d'établissement procurant une fonction de gestion de table pour une table d'association et ayant un moyen pour détecter une table d'association, pour générer une rubrique si une rubrique pour ladite table d'association n'existe pas, et pour actualiser une rubrique avec de l'information reçue si la table d'association existe déjà; et
une unité de communication pour communiquer entre des dispositifs de commande de réseau afin d'établir l'information de table d'association, l'unité de communication ayant un moyen pour détecter un message de table d'association, pour déterminer si une table correspondant à un terminal de correspondant de destination existe, et s'il existe, pour actualiser la table d'association, et s'il n'existe pas, pour générer et émettre un message d'acquittement d'association,
dans lequel l'unité d'authentification, l'unité d'établissement et l'unité de communication sont installées dans un terminal de correspondant mandataire (24) dans un réseau comprenant la multiplicité de sous-réseaux; et
dans lequel l'unité d'authentification (23) comprend un serveur d'authentification de couche de liaison pour authentifier un terminal de correspondant lorsque ce terminal de correspondant ne peut pas utiliser le protocole Mobile IP, et dans lequel le terminal de correspondant mandataire comprend un moyen pour identifier un terminal de correspondant lorsque ce terminal de correspondant peut utiliser le protocole Mobile IP.

2. Le système de communication mobile selon la revendication 1, **caractérisé en outre en ce qu'**un protocole Mobile IP est adopté en tant que protocole de communication.

3. Le système de communication mobile selon la revendication 2, **caractérisé en outre en ce que** le terminal de correspondant (25) ne supporte pas le protocole Mobile IP.

4. Le système de communication mobile selon la revendication 2, **caractérisé en outre par** :
une unité de transmission en tunnel pour modifier un paquet de données reçu du terminal de correspondant (25) et destiné au terminal mobile (12) et pour émettre le paquet de données modifié directement vers le premier sous-réseau (1) lorsque le terminal de correspondant (25) est présent dans le premier sous-réseau (1) et le terminal mobile (12) est présent dans le deuxième sous-réseau (2).

5. Le système de communication mobile selon la revendication 1, **caractérisé en outre en ce que** le terminal de correspondant (25) est un terminal qui peut se déplacer d'un sous-réseau (1) à un autre sous-réseau (2).

6. Le système de communication mobile selon la revendication 1, **caractérisé en outre par** :
un routeur (24) couplé au terminal de correspondant (25), l'unité d'établissement et l'unité de communication étant incorporées dans ce routeur (24).

7. Le système de communication mobile selon la revendication 2, **caractérisé en outre par** :
un moyen de vérification d'état de visite pour déterminer si le terminal de correspondant (25) est présent ou non dans une zone prédéterminée.

8. Le système de communication mobile selon la revendication 7, **caractérisé en outre par** :
un moyen, fonctionnant si le terminal de correspondant (25) n'est pas présent dans la zone prédéterminée, pour supprimer l'information de table d'association pour le terminal de correspondant (25).

9. Le système de communication mobile selon la revendication 2, **caractérisé en outre par** :
un moyen, fonctionnant si le terminal de correspondant (25) est un terminal de correspondant (25) du type Mobile IP, pour déterminer que le terminal de correspondant (25) a quitté une zone prédéterminée lorsque le terminal de correspondant (25) n'effectue pas un enregistrement dans la zone prédéterminée.

10. Le système de communication mobile selon la revendication 7, **caractérisé en outre en ce que**
le moyen de vérification d'état de visite détermine que le terminal de correspondant (25) n'est plus présent dans la zone prédéterminée, en détectant que des paquets concernant le terminal de correspondant (25) ne sont pas émis et reçus.

11. Un procédé de communication mobile pour permettre à un terminal de correspondant (25) de communiquer avec un terminal mobile (12) dans un réseau composé d'une multiplicité de sous-réseaux ayant des dispositifs de commande de réseau, et pour continuer à communiquer même lorsque le terminal mobile (12) se déplace à partir d'un sous-réseau (1) vers un autre sous-réseau (2), incluant l'étape d'authentification du terminal de correspondant (25); et **caractérisé par** les étapes consistant à établir une information de table d'association dont le terminal de correspondant (25) a besoin pour communiquer avec le terminal mobile (12);
actualiser l'information de table d'association lorsque le terminal mobile (12) se déplace d'un premier sous-réseau (1) à un deuxième sous-réseau (2); et
communiquer l'information de table d'association entre les dispositifs de commande de réseau afin d'établir l'information de table d'association;
dans lequel l'étape d'authentification, l'étape d'établissement et l'étape de communication sont exécutées dans un terminal de correspondant mandataire (24) dans un réseau comprenant la multiplicité de sous-réseaux, et
dans lequel les étapes d'établissement et d'actualisation comprennent la gestion de tables d'association, la détection d'une table d'association, la génération d'une rubrique si une rubrique pour la table d'association n'existe pas, et l'actualisation d'une rubrique avec de l'information reçue concernant la table d'association si la table d'association existe déjà, l'étape de communication comprend la détection d'un message de table d'association, la détermination du fait qu'une table correspondant à un terminal de correspondant de destination existe ou non, l'actualisation d'une table d'association si elle existe, et la génération et l'émission d'un message d'acquittement d'association si elle n'existe pas, et dans lequel l'étape d'authentification comprend l'authentification d'un terminal de correspondant au moyen d'un serveur d'authentification de couche de liaison lorsque ce terminal de correspondant ne peut pas utiliser le protocole Mobile IP, et l'authentification du terminal de correspondant par le terminal de correspondant mandataire lorsque le terminal de correspondant peut utiliser le protocole Mobile IP.

12. Le procédé de communication mobile selon la revendication 11, **caractérisé en outre en ce qu'**un protocole Mobile IP est adopté en tant que protocole de communication dans le procédé de communication mobile.

13. Le procédé de communication mobile selon la revendication 12, **caractérisé en outre en ce que** le terminal de correspondant (25) ne supporte pas le protocole Mobile IP.

14. Le procédé de communication mobile selon la revendication 12, **caractérisé en outre par** les étapes suivantes :
modifier un paquet de données reçu du terminal de correspondant (25) et destiné au terminal mobile (12); et émettre le paquet de données modifié directement vers le deuxième sous-réseau (2), et faire en sorte que le paquet de données atteigne le terminal mobile (12), lorsque le terminal de correspondant (25) est présent dans le premier sous-réseau (1) et le terminal mobile (12) est présent dans le deuxième sous-réseau (2).

15. Le procédé de communication mobile selon la revendication 11, **caractérisé en outre en ce que** le terminal de correspondant (25) est un terminal qui peut se déplacer parmi la multiplicité de sous-réseaux.

16. Le procédé de communication mobile selon la revendication 11, **caractérisé en outre en ce que** les étapes d'établissement et de communication sont effectuées dans un routeur (24) couplé au terminal de correspondant (25).

17. Le procédé de communication mobile selon la revendication 12, **caractérisé en outre par** l'étape suivante :
déterminer si le terminal de correspondant (25) est présent ou non dans une zone prédéterminée, la zone prédéterminée étant une zone dans laquelle le terminal de correspondant (25) peut accéder au réseau.

18. Le procédé de communication mobile selon la revendication 17, **caractérisé en outre en ce que**
si le terminal de correspondant (25) n'est pas présent dans la zone prédéterminée, l'information de table d'association pour le terminal de correspondant (25) est supprimée.

19. Le procédé de communication mobile selon la revendication 12, **caractérisé en outre en ce que**
si le terminal de correspondant (25) est un terminal de correspondant (25) du type Mobile IP, on détermine que le terminal de correspondant (25) a quitté une zone prédéterminée lorsque le terminal de correspondant (25) n'effectue pas un enregistrement dans la zone prédéterminée.

20. Le procédé de communication mobile selon la revendication 17, **caractérisé en outre en ce que**
l'étape de vérification d'état de visite détermine que le terminal de correspondant (25) n'est plus présent dans la zone prédéterminée en détectant que des paquets ne sont pas émis et reçus par le terminal de correspondant (25).
